# EUROPÄISCHE PATENTSCHRIFT

(11) **EP 3 084 128 B1**
(45) Veröffentlichungstag und Bekanntmachung des Hinweises auf die Patenterteilung: **03.07.2019**
(21) Anmeldenummer: 14806678.0
(22) Anmeldetag: 05.12.2014
(51) Int. Cl.: F01C 1/46, F01C 20/14, F02B 53/02

(54) **VERBRENNUNGSMOTOR**
COMBUSTION ENGINE
MOTEUR À COMBUSTION INTERNE

(30) Priorität: 20.12.2013 DE 102013114657
(43) Veröffentlichungstag der Anmeldung: 26.10.2016
(73) Patentinhaber: Zink, Alexander M., 86510 Ried (DE)
(72) Erfinder: Zink, Alexander M., 86510 Ried (DE)
(74) Vertreter: Popp, Eugen
(86) Internationale Anmeldenummer: PCT/EP2014/076755
(87) Internationale Veröffentlichungsnummer: WO 2015/091028

(56) Entgegenhaltungen:
- DE-A1-102008 050 014
- US-A- 1 242 693
- US-A- 1 705 359

## Beschreibung

Die Erfindung betrifft einen Verbrennungsmotor mit einem Rotor, einem Gehäuse und wenigstens zwei zwischen dem Rotor und dem Gehäuse ausgebildeten Brennkammern gemäß dem Oberbegriff der Ansprüche 1 oder 2.

Verbrennungsmotoren der hier angesprochenen Art werden auch als "Kreiskolbenverbrennungsmotoren" bezeichnet. Ein derartiger aus dem Stand der Technik bekannter Kreiskolbenverbrennungsmotor wird beispielsweise in der DE 10 2008 050 014 B4 beschrieben. Ein weiterer als "Tangential Combustion Turbine" bezeichneter Verbrennungsmotor ist in der US 8,061,327 B2 gezeigt. Derartige Kreiskolbenverbrennungsmotoren umfassen einen Rotor, der drehbar in einem Gehäuse gelagert ist und wenigstens zwei zwischen dem Rotor und dem Gehäuse ausgebildete Brennkammern, wobei das Gehäuse an seiner dem Rotor zugewandten Seite mindestens eine Zündmulde aufweist, in die ein Kraftstoffzufuhr- und Zündsystem mündet. Die Funktionsweise eines in der DE 10 2008 050 014 B4 gezeigten Verbrennungsmotors ist derart, dass er das grundlegende Prinzip des Verbrennungsmotors mit der Funktion und Wirkungsweise einer Gasturbine kombiniert. Ein derartiger kombinierter Gasturbinen-Verbrennungsmotor weist in vorteilhafter Weise eine geringe Anzahl von beweglichen Teilen im Vergleich zu herkömmlichen Verbrennungsmotoren auf. Er weist außerdem einen höheren Wirkungsgrad auf, da die Wirkung der thermischen Verbrennungskraft tangential und unmittelbar auf den Rotor wirkt. Die in der DE 10 2008 050 014 B4 verwendeten Pendelkolben sind jedoch insofern nachteilig, als sie durch ihre Pendelbewegung Vibrationen bewirken können und relativ starke Kompressionsfedern zur Verlagerung der Pendelkolben und damit zum Betrieb des Verbrennungsmotors benötigen. Durch die Federn entstehen darüber hinaus hohe Reibungskräfte, die zwischen dem Pendelkolben und dem Rotor wirken.

Aufgabe der vorliegenden Erfindung ist es daher, einen Verbrennungsmotor zu schaffen, der die Vorteile des bekannten Gasturbinen-Verbrennungsmotors aufweist, aber wesentlich vibrationsarmer ausgebildet ist und geringe Reibungskräfte entwickelt. Insbesondere soll ein möglichst hoher Druck des zu zündenden Luft-/Kraftstoffgemisches erreicht werden.

Zur Lösung der oben genannten Aufgabe wird ein Verbrennungsmotor mit den Merkmalen des Anspruchs 1 vorgeschlagen. Er weist einen Rotor, ein Gehäuse und wenigstens zwei zwischen dem Rotor und dem Gehäuse ausgebildete Brennkammern auf, wobei das Gehäuse an seiner dem Rotor zugewandten Seite mindestens eine Zündmulde aufweist, in die ein Kraftstoffzufuhr- und Zündsystem mündet. Der Verbrennungsmotor zeichnet sich dadurch aus, dass mindestens eine drehbar im Gehäuse gelagerte Ventileinrichtung vorgesehen ist, die dazu ausgebildet ist, die Brennkammern zumindest zeitweise in eine Zündkammer und eine Kompressionskammer zu unterteilen, wobei die Ventileinrichtung wenigstens einen Rotor-Durchlassabschnitt, wenigstens einen Schließabschnitt und wenigstens einen Gas-Durchlassabschnitt aufweist.

Ein wesentlicher Punkt der Erfindung liegt also darin, dass die Ventileinrichtung insbesondere nach Art eines Kreisventils drehbar in dem Gehäuse gelagert ist, so dass auf Kompressionsfedern verzichtet werden kann. Die Drehbewegung der Ventileinrichtung ist dabei vorzugsweise mit der Drehgeschwindigkeit des Rotors abgestimmt, so dass auch eine jeweilige Positionierung des Rotor-Durchlassabschnitts, des Schließabschnitts und des Gas-Durchlassabschnitts auf die Rotor-Position abgestimmt ist. Auf diese Weise ist ein vibrationsarmer Betrieb des Verbrennungsmotors möglich, der darüber hinaus die Entstehung von Reibungskräften minimiert.

Weiterhin wird die Aufgabe durch einen Verbrennungsmotor gemäß Anspruch 2 gelöst. Insbesondere wird die Aufgabe durch einen Verbrennungsmotor mit einem Rotor, einem Gehäuse und wenigstens zwei zwischen dem Rotor und dem Gehäuse ausgebildeten Brennkammern gelöst, wobei das Gehäuse an seiner dem Rotor zugewandten Seite mindestens eine Zündmulde aufweist, in die ein Kraftstoffzufuhr- und Zündsystem mündet, wobei mindestens eine drehbar im Gehäuse gelagerte Ventileinrichtung vorgesehen ist, die dazu ausgebildet ist, die Brennkammern zumindest zeitweise in eine Zündkammer und eine Kompressionskammer zu unterteilen, wobei die Ventileinrichtung zeitweise gleichzeitig eine Kompressionskammer von einer ersten Brennkammer und eine Zündkammer von einer zweiten Brennkammer abtrennt und zwischen der Zündkammer und der Kompressionskammer währenddessen eine Fluidverbindung besteht.

Insbesondere werden Brennkammern durch Unterteilung von Zwischenräumen zwischen dem Rotor und dem Gehäuse als voneinander getrennte Zwischenraumabschnitte gebildet. Unter einer ersten und einer zweiten Brennkammer können insbesondere zwei aufeinanderfolgende, also benachbarte, insbesondere entlang des Umfangs des Rotors angeordnete, räumlich abgetrennte Zwischenraumabschnitte angesehen werden. Die Bezeichnungen "erste" und "zweite" Brennkammer beziehen sich dabei nicht dauerhaft fest auf eine bestimmte Brennkammer, sondern können vielmehr als relative Bezeichnungen im Sinne von in Drehrichtung des Rotors "davor" bzw. "dahinter", insbesondere in Bezug auf einen radialen Vorsprung des Rotors, verstanden werden. Während der Rotation des Rotors wird also jede Brennkammer zeitweise erste oder zweite Brennkammer im Sinne der Erfindung sein.

Ein wesentlicher Punkt der Erfindung liegt darin, dass die Ventileinrichtung, insbesondere nach Art eines Kreisventils, drehbar in dem Gehäuse gelagert ist, so dass auf Kompressionsfedern verzichtet werden kann. Die Drehbewegung der Ventileinrichtung ist dabei vorzugsweise mit der Drehgeschwindigkeit des Rotors abgestimmt, so dass auch eine jeweilige Positionierung der Ventileinrichtung auf die Rotor-Position abgestimmt ist. Auf diese Weise ist ein vibrationsarmer Betrieb des Verbrennungsmotors möglich, der darüber hinaus die Entstehung von Reibungskräften minimiert. Ein weiterer Kerngedanke der Erfindung besteht darin, während bestimmter Zeitintervalle durch die Ventileinrichtung eine Kompressionskammer von einer ersten Brennkammer und gleichzeitig eine Zündkammer von einer zweiten Brennkammer abzutrennen, wobei diese beiden Kammern währenddessen so eine Druckschleuse bilden, dass komprimiertes Fluid über eine währenddessen bestehende Fluidverbindung von der ersten Brennkammer in die zweite Brennkammer, vorzugsweise entgegen der Drehrichtung des Rotors, gelangen kann. Unter einer Fluidverbindung kann in diesem Zusammenhang beispielsweise eine Strömungsverbindung in Form eines Kanals oder mehrerer Kanäle bzw. Leitungen, eines Spalts, einer Querschnittserweiterung, einer Aussparung oder einer muldenförmigen Vertiefung in einem Gehäuse verstanden werden. Dadurch wird in der Zündkammer ein möglichst hoher Druck eines komprimierten Fluids, insbesondere des zu zündenden Luft-/Kraftstoffgemisches, erreicht. Die Leistung und der Wirkungsgrad des erfindungsgemäßen Verbrennungsmotors kann auf diese Weise erhöht werden.

In einer vorteilhaften Weiterbildung der Erfindung umfasst die Ventileinrichtung mindestens zwei Teilventileinrichtungen mit je wenigstens einem Rotor-Durchlassabschnitt und wenigstens einem Schließabschnitt. Insbesondere wirken eine erste Teilventileinrichtung und eine zweite Teilventileinrichtung so zusammen, dass sie gemeinsam eine Ventileinrichtung bilden, die als Doppelventileinrichtung ausgebildet ist. Dabei sind insbesondere die jeweiligen Positionierungen des Rotor-Durchlassabschnitts und des Schließabschnitts von beiden Teilventileinrichtungen auf die Rotor-Position abgestimmt. In einer Ausführungsform kann die Ventileinrichtung, insbesondere eine erste Teilventileinrichtung, wenigstens einen Rotor-Durchlassabschnitt, wenigstens einen Schließabschnitt und wenigstens einen Gas-Durchlassabschnitt aufweisen. Vorzugsweise ist eine erste Teilventileinrichtung in Drehrichtung des Rotors gesehen vor einer zweiten Teilventileinrichtung angeordnet. Insbesondere sind dabei die jeweilige Positionierung des Rotor-Durchlassabschnitts und des Schließabschnitts und des Gas-Durchlassabschnitts auf die Rotor-Position abgestimmt. Beispielsweise kann durch einen Gas-Durchlassabschnitt komprimiertes Fluid, insbesondere Luft, aus einer Kompressionskammer in eine Zündkammer nachströmen, sodass dort eine weitere Zündung, insbesondere eine Zweitverbrennung, stattfinden kann.

Besonders vorteilhaft ist es, wenn der Rotor-Durchlassabschnitt, der wenigstens eine Schließabschnitt und der wenigstens eine Gas-Durchlassabschnitt rotierbar gelagert sind. Dies ist besonders dann vorteilhaft, wenn die Ventileinrichtung als Kreisventil, vorzugsweise scheibenartig, ausgebildet ist und der Rotor-Durchlassbereich, der wenigstens eine Schließabschnitt und der wenigstens eine Gas-Durchlassabschnitt vorzugsweise in dieser Reihenfolge hintereinander angeordnet sind. Die Ventileinrichtung muss dabei nicht kreisförmig ausgebildet sein. Vielmehr kann die Ventileinrichtung auch als Schieber ausgebildet sein oder eine topf- oder hohlkegelförmige Ausgestaltung aufweisen.

Der Rotor weist vorzugsweise wenigstens zwei radiale Vorsprünge zur Bildung der Brennkammern auf. Die radialen Vorsprünge können dabei jeweils mit einem lamellenartigen Erweiterungselement in einer radialen und/oder axialen (lateralen) Richtung des Verbrennungsmotors verlängert sein, die bei einer Rotation des Rotors an der Innenwandung des Gehäuses entlang gleiten. Vorzugsweise sind die lamellenartigen Erweiterungselemente jeweils mit mindestens einem Gleitschuh versehen, um die Gleitbewegung der Erweiterungselemente an der Innenwandung des Gehäuses zu verbessern und Reibungskräfte zu minimieren. Die Ventileinrichtung und die radialen Vorsprünge des Rotors können sich dabei zumindest bereichsweise in der radialen Richtung des Rotors gesehen, überlappen.

Die Drehachse der Ventileinrichtung ist in einem beliebigen Winkel und insbesondere senkrecht, d.h. in einem Winkel von 90 Grad, zu der Drehachse des Rotors angeordnet. Die Drehgeschwindigkeit der Ventileinrichtung kann elektrisch oder mechanisch in Abhängigkeit von der Drehzahl des Rotors einstellbar sein. Insbesondere kann vorgesehen sein, dass die Ventileinrichtung mit dem Rotor bzw. mit einer Antriebswelle, insbesondere über ein Getriebe, mechanisch gekoppelt ist. Auf diese Weise lässt sich die Drehbewegung und die Funktionsweise der Ventileinrichtung in optimaler Weise auf die Drehzahl des Rotors einstellen. Der Verbrennungsvorgang kann auf diese Weise optimiert werden. Zur Aufnahme der lamellenartigen Erweiterungselemente kann das Gehäuse an seiner dem Rotor zugewandten Innenwandung wenigstens eine Vertiefung aufweisen. Im Übrigen kann der Gas-Durchlassabschnitt der Ventileinrichtung mehrere düsenartigen Öffnungen zur Herstellung einer Fluidverbindung zwischen der Zündkammer und der Kompressionskammer aufweisen.

Die Ventileinrichtung, bzw. eine Teilventileinrichtung, kann ein- oder mehrteilig ausgebildet sein und insbesondere mindestens zwei Teile aufweisen, die in entgegengesetzten Richtungen drehbar gelagert sind und die bei einer synchronen Rotation den Rotor-Durchlassabschnitt, den Schließabschnitt und den Gas-Durchlassabschnitt bilden. In der Drehrichtung des Motors gesehen, ist die Ventileinrichtung, bzw. die erste Teilventileinrichtung, vorzugsweise vor der Zündmulde angeordnet.

In dem Gehäuse ist vorzugsweise mindestens ein Zufuhrkanal angeordnet, der in der Drehrichtung des Rotors gesehen, vor der Ventileinrichtung angeordnet ist, um zur Zufuhr von Gas oder eines Verbrennungsgemisches, insbesondere eines Brennstoff-Luftgemisches oder Luft, in die Brennkammer dient. Weiterhin ist vorzugsweise wenigstens eine Abgas-Ventileinrichtung vorgesehen, die wenigstens einen rotierbaren Rotor-Durchlassabschnitt und wenigstens einen rotierbaren Schließabschnitt aufweist. Die Abgas-Ventileinrichtung ist dabei vorzugsweise in der Drehrichtung des Rotors gesehen, nach der Zündmulde angeordnet, so dass das verbrannte Gas über die Abgas-Ventileinrichtung abgeführt werden kann. Insbesondere ist die Abgas-Ventileinrichtung mit mindestens einem in dem Gehäuse angeordneten Abluftkanal zum Abführen des verbrannten Gases verbunden. Im Übrigen kann vorgesehen sein, dass der Abluftkanal mit dem (Luft-)Zufuhrkanal in Fluidverbindung steht, so dass zumindest ein Teil des verbrannten Gases der Brennkammer zugeführt werden kann.

Die Zündkammer wird vorzugsweise durch den Rotor, einen radialen Vorsprung des Rotors, die Ventileinrichtung, die Zündmulde und die Innenwandung des Gehäuses begrenzt. Ferner kann der Rotor direkt oder indirekt, insbesondere über ein Getriebe, mit einer Turbine gekoppelt sein, die mit dem ausgestoßenen Gas des Abluftkanals gespeist wird.

Sämtliche zuvor beschriebenen Weiterbildungen der Erfindung bezüglich einer Ventileinrichtung beziehen sich sinngemäß insbesondere auch auf eine oder mehrere Teilventileinrichtung(en).

Insbesondere sind der wenigstens eine Rotor-Durchlassabschnitt, der wenigstens eine Schließabschnitt und/oder der wenigstens eine Gas-Durchlassabschnitt einer Teilventileinrichtung rotierbar gelagert. Dabei kann insbesondere keine Teilventileinrichtung oder nur eine Teilventileinrichtung, insbesondere eine erste Teilventileinrichtung, wenigstens einen Gas-Durchlassabschnitt aufweisen. Die Teilventileinrichtungen können insbesondere als Kreisventile ausgebildet sein. Vorzugsweise ist eine erste Teilventileinrichtung in der Drehrichtung des Rotors gesehen vor der Zündmulde angeordnet, während eine zweite Teilventileinrichtung vorzugsweise dahinter angeordnet ist. Insbesondere wird die Zündkammer durch den Rotor, einen radialen Vorsprung des Rotors, eine erste Teilventileinrichtung, die Zündmulde und die Innenwandung des Gehäuses begrenzt. Insbesondere stellt die Zündkammer einen Abschnitt einer zweiten Brennkammer dar. Eine Kompressionskammer wird beispielsweise durch den Rotor, einen radialen Vorsprung des Rotors, eine zweite Teilventileinrichtung und die Innenwandung begrenzt. Insbesondere stellt eine Kompressionskammer einen Abschnitt einer ersten Brennkammer dar. Eine erste und eine zweite Teilventileinrichtung können verschieden oder gleichartig gestaltet sein, insbesondere gemeinsam oder getrennt voneinander, insbesondere über Rollenketten, Zahnriemen, Zahnräder, Getriebe oder elektrisch, jeweils mit entsprechender Übersetzung, angetrieben werden.

In einer vorteilhaften Weiterbildung der Erfindung ist die Ventileinrichtung als Doppelventileinrichtung mit einer ersten Teilventileinrichtung und einer zweiten Teilventileinrichtung ausgeführt. Die Teilventileinrichtungen können insbesondere starr miteinander verbunden, vorzugsweise einteilig miteinander ausgeführt, sein. Vorzugsweise sind die Teilventileinrichtungen aber als getrennte, insbesondere unabhängig angetriebene, Teilventileinrichtungen ausgeführt. In einer Doppelventileinrichtung wirken die Teilventileinrichtungen in definierter Weise zusammen, insbesondere durch die abgestimmte Gestaltung ihrer Abschnitte bzw. Kreissektoren, beispielsweise als Rotor-Durchlassabschnitte, Schließabschnitte oder Gas-Durchlassabschnitte, und deren Versatz zueinander um vorgegebene Winkel. Die Teilventileinrichtungen einer Doppelventileinrichtung ermöglichen die gleichzeitige Abtrennung einer Kompressionskammer von einer ersten Brennkammer und einer Zündkammer von einer zweiten Brennkammer. Dabei ist die erste Brennkammer in Drehrichtung des Rotors gesehen insbesondere vor der zweiten Brennkammer angeordnet und vorzugsweise durch einen radialen Vorsprung des Rotors von dieser getrennt. Die Doppelventileinrichtung kann insbesondere so angeordnet sein, dass ihre Teilventileinrichtungen zeitweise erste und zweite Druckschleusenabschnitte einer Druckschleuse begrenzen und vorzugsweise den radialen Vorsprung des Rotors zeitweise in einer Druckschleuse einschließen. Vorzugsweise innerhalb der Doppelventileinrichtung kann durch eine Fluidverbindung, beispielsweise in Form der Zündmulde oder von Seitenkanälen, komprimiertes Fluid von einer ersten Brennkammer, bzw. einem ersten Druckschleusenabschnitt, in eine zweite Brennkammer, bzw. einen zweiten Druckschleusenabschnitt, strömen. Durch die Funktion einer Doppelventileinrichtung als eine Druckschleuse kann komprimiertes Fluid aus einer ersten Brennkammer in eine zweite Brennkammer umgeleitet bzw. geschleust werden, wodurch in einer Zündkammer ein möglichst hoher Druck dieses Fluids, insbesondere eines Luft-Kraftstoff-Gemisches, erzeugt werden kann.

In einer vorteilhaften Weiterbildung der Erfindung sind die erste Teilventileinrichtung und/oder die zweite Teilventileinrichtung als Kreisventile, insbesondere mit einer gemeinsamen Drehachse, vorzugsweise auf einer gemeinsamen Welle, ausgeführt. Vorzugsweise sind die erste Teilventileinrichtung und/oder die zweite Teilventileinrichtung aber als Kreisventile mit getrennten Drehachsen, vorzugsweise mit getrennten Wellen, ausgeführt. Unter einem Kreisventil kann eine Ventileinrichtung bzw. Teilventileinrichtung mit einer vorzugsweise kreisförmigen bzw. tellerförmigen Ventilscheibe verstanden werden, die verschiedene Sektoren, die als Rotor-Durchlassabschnitt, Schließabschnitt oder Gas-Durchlassabschnitt gestaltet sein können, aufweist. Durch eine Rotation eines Kreisventils kann also ein Strömungsweg innerhalb einer Brennkammer geöffnet oder versperrt werden bzw. ein radialer Vorsprung des Rotors durch eine Ventileinrichtung hindurch- bzw. an dieser vorbeigelassen werden. Durch eine solche Ausführungsform der Teilventileinrichtungen als rotierende Kreisventile ist ein vibrationsarmer Betrieb des Verbrennungsmotors möglich.

In einer vorteilhaften Weiterbildung der Erfindung sind die erste Teilventileinrichtung und die zweite Teilventileinrichtung um einen Doppelventilwinkel zwischen 20 und 35 Grad in Drehrichtung des Rotors versetzt zueinander angeordnet. Somit definiert der Doppelventilwinkel insbesondere einen Sektor des Rotors bzw. einen Umfangsabschnitt der Brennkammer, über den sich die Doppelventileinrichtung erstreckt, der also zwischen der ersten Teilventileinrichtung und der zweiten Teilventileinrichtung eingeschlossen ist. Insbesondere durch die Wahl des Doppelventilwinkels kann das erreichbare Verdichtungsverhältnis des Verbrennungsmotors eingestellt werden.

In einer vorteilhaften Weiterbildung der Erfindung weist die zweite Teilventileinrichtung eine tellerförmige Ventilscheibe auf, wobei eine Flächennormale der Ventilscheibe vorzugsweise parallel zur Drehrichtung des Rotors verläuft. Eine tellerförmige Ventilscheibe kann als eine nicht-ebene Ventilscheibe verstanden werden, deren äußerer Rand vorzugsweise gegenüber einem inneren Bereich der Ventilscheibe gekippt bzw. aufgestellt ist, vorzugsweise so, dass der Tellerrand in radialer Richtung des Rotors ausgerichtet ist. Insbesondere steht die Flächennormale des Tellerrands senkrecht auf die radiale Richtung des Rotors und verläuft parallel zu dessen Umfangs- bzw. Drehrichtung. Auf diese Weise können zwei Teilventileinrichtungen um eine gemeinsame Drehachse bzw. auf einer gemeinsamen Welle angebracht sein und gleichzeitig mit ihren Ventilscheiben in radialer Richtung des Rotors ausgerichtet sein. Dabei kann die erste und/oder zweite Teilventileinrichtung eine tellerförmige Ventilscheibe aufweisen, wobei insbesondere zwei sich gegenüberliegende entgegengesetzt ausgerichtete tellerförmige Ventilscheiben vorgesehen sein können.

In einer vorteilhaften Weiterbildung der Erfindung ist die Zündmulde zwischen der ersten Teilventileinrichtung und der zweiten Teilventileinrichtung angeordnet. Dadurch kann eine Fluidverbindung zwischen der ersten und der zweiten Brennkammer über die Zündmulde bestehen, insbesondere während ein radialer Vorsprung des Rotors sich zwischen den Teilventileinrichtungen der Doppelventileinrichtung befindet. Dabei könnte die Zündmulde in Form einer lokalen Querschnittserweiterung einen Bypass-Strömungskanal bzw. -spalt um den radialen Vorsprung, insbesondere dessen Kopfabschnitt, herum bilden. Alternativ können aber auch im Bereich der Zündmulde Seitenkanäle in dem Gehäuse vorgesehen sein, die beispielsweise durch zusätzliche Ventile zu öffnen oder verschließbar sein könnten, um eine Fluidverbindung herzustellen. Eine Ventileinrichtung, die um die Zündmulde oder im Bereich der Zündmulde angeordnet ist, kann - im Gegensatz zu einer Abgas- oder Frischluft-Ventileinrichtung, die im Bereich eines Abluftkanals und/oder Zufuhrkanals angeordnet sein kann - auch als Zünd-Ventileinrichtung bezeichnet werden.

In einer vorteilhaften Weiterbildung der Erfindung beträgt das Drehzahlverhältnis des Rotors zu der Ventileinrichtung, insbesondere der ersten Ventileinrichtung und/oder der zweiten Ventileinrichtung, 1:3 oder 2:3. Das Drehzahlverhältnis zwischen den Teilventileinrichtungen kann grundsätzlich verschieden sein, insbesondere wenn diese getrennt voneinander angetrieben werden oder eine unterschiedliche Anzahl von Rotor-Durchlassabschnitten, Schließabschnitten und/oder Gas-Durchlassabschnitten aufweisen. Beispielsweise beträgt das Drehzahlverhältnis bei drei Brennkammern und einem Rotor-Durchlassabschnitt pro Ventileinrichtung 1:3, bei zwei Rotor-Durchlassabschnitten pro Ventileinrichtung 2:3. Auf diese Weise kann eine kinematische Abstimmung zwischen den Ventileinrichtungen und dem Rotor, insbesondere ein kontaktloses "Ineinandergreifen" bzw. eine berührungslose "Verzahnung" von radialen Vorsprüngen des Rotors mit Ventilöffnungen in Form von Rotor-Durchlassabschnitten, bei entsprechender Anordnung der radialen Vorsprünge bzw. der Abschnitte der Ventileinrichtungen gewährleistet werden. Besonders bevorzugt wird ein Drehzahlverhältnis von 1:3. Insbesondere kann eine Ventileinrichtung bzw. eine Teilventileinrichtung ein- oder mehrteilig ausgebildet sein, insbesondere zwei in entgegengesetzten Richtungen drehbare Teile, vorzugsweise Ventilscheiben, aufweisen, die bei synchroner Rotation die Öffnungszeit der Ventileinrichtung reduziert, insbesondere halbiert. Beispielsweise kann jede der Teilventileinrichtungen als Doppelscheiben mit zwei gleichartigen, aber gegeneinander rotierenden, Ventilscheiben ausgeführt sein, so dass sich die Schließ- bzw. Öffnungszeit des Ventils halbiert. Vorzugsweise können Teilventileinrichtungen mit solchen Doppelscheiben derart gestaltet werden, dass sie innerhalb einer 10°-Drehung der Ventilwelle schließen bzw. öffnen. Auf diese Weise ist ein möglichst schnelles Öffnen und Schließen der Doppelventileinrichtung bzw. Druckschleuse möglich und Druckverluste können reduziert werden.

In einer vorteilhaften Weiterbildung der Erfindung sind zumindest abschnittsweise entlang einer Außenfläche einer Ventilscheibe der Ventileinrichtung mindestens ein Abdichtungselement vorgesehen, das vorzugsweise in Umfangsrillen geführt ist und vorzugsweise jeweils auf die Länge eines Schließabschnitts abgestimmt ist. Solche Abdichtungselemente können beispielsweise als Lamellen oder Kolbenringsektoren ausgeführt sein, wobei zwei bis drei solcher, vorzugsweise an die Anzahl und Länge der Schließabschnitte angepasste Segmente vorgesehen sein können. Auf diese Weise kann eine möglichst fluiddichte Anpassung der Außenfläche der Ventilscheibe an radiale Außenflächen des Rotors bzw. Innenflächen des Gehäuses realisiert werden.

Vorzugsweise sind die Abdichtungselemente in radialer Richtung verschieblich an der Ventilscheibe befestigt, vorzugsweise mit radialem Spiel zwischen 0,05 mm und 0,15 mm, vorzugsweise 0,10 mm. Besonders bevorzugt weisen die Abdichtungselemente sich in radialer Richtung erstreckende Langlöcher auf und sind über darin geführte Stifte an einer Ventilscheibe radial verschieblich befestigt. Beispielsweise könnte an beiden Enden einer Lamelle bzw. eines Kolbenringsektors ein Langloch vorgesehen sein, in dem ein Stift sitzt, der in der Ventilscheibe, beispielsweise in der Umfangsrille, gelagert ist. Alternativ zu Langlöchern können auch Rundlöcher mit einem Durchmesser, der beispielsweise um 0,05 mm bis 0,15 mm größer ist als der Durchmesser des Stifts, vorgesehen sein. Durch Einfahren der Ventile gegen den Rotor kann erreicht werden, dass sich die tatsächliche relative Verschiebung zwischen dem Abdichtungselement und der Ventilscheibe praktisch auf null reduziert, so dass im Betrieb die Zentrifugalkräfte von den Stiften übernommen werden und keine Zentrifugal-Reibungskräfte auf den Rotor oder das Gehäuse wirken.

Alternativ zu der vorgenannten Weiterbildung der Erfindung sind vorzugsweise zumindest abschnittsweise Labyrinth-Dichtungen, vorzugsweise Luft-Labyrinth-Dichtungen, in einer Außenfläche einer Ventilscheibe der Ventileinrichtung und/oder in einer Außen- und/oder Seitenfläche der radialen Vorsprünge vorgesehen. Insbesondere bei sehr enger Einbautoleranz der Ventileinrichtungen zum Rotor und insbesondere für hohe Drehzahlen können Umfangsrillen als Labyrinth-Dichtungen ausgebildet sein. Dadurch können Kolbenringsektoren als Abdichtelemente der Ventileinrichtungen und/oder lamellenartige Erweiterungselemente zur Abdichtung der radialen Vorsprünge des Rotors zum Gehäuse entfallen. Beispielsweise können schmale Kanäle beidseitig und über die Kopffläche der radialen Vorsprünge des Rotors ausgebildet sein und als Labyrinth-Dichtung eine Abdichtungsfunktion übernehmen. Eine Ausführung mit Labyrinth-Dichtungen ist konstruktiv einfach, zuverlässig und wartungsfreundlich.

In einer vorteilhaften Weiterbildung der Erfindung wird Druckluft zur Kühlung durch die Ventileinrichtungen geführt, wobei Kühlluft vorzugsweise durch einen Abschnitt der Ventileinrichtung radial nach außen strömt. Beispielsweise kann Kühlluft, vorzugsweise mit gesteuertem Druck, durch die Ventilkappe an einer inneren radialen Position in den Zwischenraum zwischen der rotierenden Ventilscheibe und der stillstehenden Ventilkappe eingeleitet werden, durch einen Kühlkanal in der Ventilscheibe hindurchströmen und an einer äußeren radialen Position durch die Ventilkappe ausgeleitet werden. Ein solcher Kühlzwischenraum könnte sich zwischen Wellendichtringen einer Kreisventilwelle und äußeren Dichtringen, die die Ventileinrichtung gegen die Brennkammer abdichten, erstrecken. Anstelle von Kühlluft kann auch ein anderes Kühlfluid, beispielsweise Öl, verwendet werden. Alternativ oder zusätzlich könnte Kühlluft, insbesondere höheren Drucks, auch in den Bereich zwischen der Ventilkappe und dem äußeren Teil der Ventilscheibe, insbesondere einem lamellenartigen Erweiterungselement, der mit der Brennkammer in Verbindung steht, eingeleitet bzw. durch diesen hindurchgeleitet werden.

In einer vorteilhaften Weiterbildung der Erfindung verläuft die Drehachse einer Abgas-Ventileinrichtung parallel zur Drehachse des Rotors. Eine solche Ausführung ist konstruktiv einfacher und günstiger, beispielsweise als mit einer senkrecht zur Drehachse des Rotors verlaufenden Drehachse, wobei allerdings eine fluiddichte Trennung von Abgasen und Frischluft durch die Abgas-Ventileinrichtung schlechter möglich ist. Die Dichtheit ist für eine Abgas-Ventileinrichtung aber weniger wichtig als für eine Zünd-Ventileinrichtung, wobei eine geringe Menge von beigemischtem Abgas in der angesaugten Frischluft für bestimmte Verbrennungsvorgänge sogar vorteilhaft sein kann.

In einer vorteilhaften Weiterbildung der Erfindung ist ein Verdichter, vorzugsweise mit Radialverdichterschaufeln, mit dem Rotor gekoppelt, vorzugsweise auf der Drehachse des Rotors angeordnet, um vorverdichtete Frischluft als Kühlluft und/oder mit einem bestimmten Lade-Luftdruck in einem Zufuhrkanal bereitzustellen. Ein solcher Verdichter kann von der Antriebswelle des Rotors mit entsprechender Übersetzung angetrieben werden.

Insbesondere können Abgase zum Antrieb eines Turbo-Laders oder, vorzugsweise über einen Lamellen-Stator, einer mit dem Rotor konzentrisch angeordneten Turbine genutzt werden. Die Turbine kann über eine entsprechende Übersetzung mit der Antriebswelle des Rotors gekoppelt sein, um diese anzutreiben.

Insbesondere kann auf einem Gas-Durchlassabschnitt mit düsenartigen Öffnungen in einer Ventileinrichtung, insbesondere einer Teilventileinrichtung, zugunsten einer höheren Initialverdichtung in der Zündkammer verzichtet werden. Je nach gewünschter Abstimmung zwischen einer ersten Phase des Verbrennungsprozesses und einer optionalen zweiten Phase des Verbrennungsprozesses, kann über die Gestaltung des Gas-Durchlassabschnitts, insbesondere der düsenartigen Öffnungen, die Einspritzung von Druckluft aus der Kompressionskammer in die Zündkammer durch die erste Teilventileinrichtung kurz vor Schließung der zweiten Teilventileinrichtung eingestellt werden. Es ist aber auch denkbar, keine düsenartigen Öffnungen bzw. keinen Gas-Durchlassabschnitt in der ersten Teilventileinrichtung vorzusehen.

Zur Lösung der oben genannten Aufgabe wird auch ein Verfahren zum Betreiben eines Verbrennungsmotors mit den Merkmalen des Anspruchs 40 vorgeschlagen. Das Verfahren weist die folgenden Schritte auf:
- Zuführen von Gas oder einem Verbrennungsgemisch, insbesondere einem Brennstoff-Luftgemisch oder Luft, in die Brennkammer;
- Durchführen des Rotors durch den Rotor-Durchlassabschnitt zur Bildung der Zündkammer und zum Zuführen von Gas in die Zündkammer;
- Rotieren der Ventileinrichtung und Verschließen der Zündkammer mit dem Schließabschnitt;
- Aktivieren des Kraftstoffzufuhr- und Zündsystems und Durchführen der Zündung in der Zündkammer;
- Rotieren der Ventileinrichtung und Zuführen eines komprimierten Gases oder Verbrennungsgemisches von der Kompressionskammer durch den Gas-Durchlassabschnitt in die Zündkammer.

Weiterhin wird die Aufgabe durch ein Verfahren zum Betreiben eines Verbrennungsmotors gemäß Anspruch 41 gelöst. Insbesondere wird die Aufgabe durch ein Verfahren zum Betreiben eines erfindungsgemäßen Verbrennungsmotors gelöst, das die folgenden Schritte umfasst:
- Zuführen, insbesondere Ansaugen, von Gas oder einem Verbrennungsgemisch, insbesondere einem Brennstoff-Luftgemisch oder Luft, in eine erste Brennkammer;
- Abtrennung einer Kompressionskammer von der ersten Brennkammer durch Schließen der Ventileinrichtung, insbesondere einer zweiten Teilventileinrichtung der Ventileinrichtung,
- Komprimierung des Gases oder des Verbrennungsgemisches in der Kompressionskammer durch Drehen des Rotors,
- Weiterdrehen des Rotors an einer ersten Teilventileinrichtung der Ventileinrichtung vorbei, bzw. durch diese hindurch, insbesondere nach vorherigem Öffnen der ersten Teilventileinrichtung,
- Abtrennung einer Zündkammer von einer zweiten Brennkammer durch Schließen der ersten Teilventileinrichtung,
- Zuführen von Gas oder Verbrennungsgemisch aus der Kompressionskammer in die Zündkammer über eine Fluidverbindung zwischen der Kompressionskammer und der Zündkammer, insbesondere durch Verdrängen des Gases oder des Verbrennungsgemisches durch Weiterdrehen des Rotors;
- Aktivieren des Kraftstoff-Zufuhr- und Zündsystems und Durchführen der Zündung in der Zündkammer.

Besonders bevorzugt wird ein Verfahren, bei dem mindestens eine erneute Durchführung einer Zündung nach der Zufuhr des komprimierten Gases oder Verbrennungsgemisches in die Zündkammer stattfindet. Es kann auch vorgesehen sein, dass zumindest ein Teil des in der Kompressionskammer komprimierten Gases oder Verbrennungsgemisches in einer Speichereinrichtung zwischengespeichert wird. Besonders vorteilhaft ist es ferner, wenn das zwischengespeicherte Gas oder Verbrennungsgemisch der Zündkammer zugeführt wird und/oder zum Starten des Verbrennungsmotors verwendet wird. Sofern ein Verbrennungsgemisch statt eines Gases verwendet wird, kann dieses beispielsweise über den Vergaser zugeführt werden oder nach dem LPP-Verfahren kann eine Kraftstoffeinspritzung in den Frischluftkanal erfolgen.

In einer vorteilhaften Weiterbildung des erfindungsgemäßen Verfahrens werden folgende Schritte nach Durchführen der ersten Zündung in der Zündkammer (33) durchgeführt:
- Öffnen der zweiten Teilventileinrichtung;
- Einspritzen von Druckluft aus der Kompressionskammer durch düsenartige Öffnungen in der ersten Teilventileinrichtung in die zweite Brennkammer,
- Schließen der zweiten Teilventileinrichtung.

Insbesondere wird der Rotor nach dem Öffnen der zweiten Teilventileinrichtung an dieser vorbei, bzw. durch diese hindurch, weitergedreht. Vorzugsweise wird die Druckluft aus einer Kompressionskammer durch düsenartige Öffnungen in den Bereich der Zündmulde eingespritzt und durch Aktivieren des Kraftstoffzufuhr- und Zündsystems eine zweite Zündung durchgeführt. Die zweite Teilventileinrichtung und die erste Teilventileinrichtung sind so aufeinander abgestimmt, insbesondere als eine Doppelventileinrichtung mit um einen definierten Winkel zueinander versetzt ausgerichtete Doppelscheiben, ausgeführt, dass das Schließen der zweiten Teilvorrichtung kurz nach der Einspritzung des der Druckluft durch die erste Teilventileinrichtung erfolgt. Durch eine zweite Zündung kann der Verbrennungsprozess, insbesondere in Bezug auf Abgase, optimiert werden und die Leistung des Verbrennungsmotors gesteigert werden.

Die Erfindung wird im Folgenden anhand der Zeichnung näher erläutert.

Es zeigen:
- Fig. 1: Eine schematische Schnittdarstellung einer Hälfte eines Verbrennungsmotors gemäß der Erfindung;
- Fig. 2: eine schematische Querschnittdarstellung einer Ventileinrichtung gemäß der Erfindung;
- Fig. 3: eine perspektivische Darstellung eines mit einem radialen Vorsprung versehenen Rotors;
- Fig. 4: eine perspektivische Darstellung eines lamellenartigen Erweiterungselements mit zwei Gleitschuhen;
- Fig. 5: eine schematische Darstellung einer Ausführungsform erfindungsgemäßer Ventileinrichtungen und deren Anordnung relativ zum Rotor in einer Teilschnittansicht;
- Fig. 6a: eine schematische Darstellung einer Ausführungsform eines erfindungsgemäßen Verbrennungsmotors mit einer ersten Stellung des Rotors und der Ventileinrichtungen;
- Fig. 6b: eine schematische Darstellung der Ausführungsform nach Figur 6a eines erfindungsgemäßen Verbrennungsmotors mit einer zweiten Stellung des Rotors und der Ventileinrichtungen;
- Fig. 6c: eine schematische Darstellung einer Ausführungsform nach Figur 6a eines erfindungsgemäßen Verbrennungsmotors mit einer dritten Stellung des Rotors und der Ventileinrichtungen;
- Fig. 6d: eine schematische Darstellung einer Ausführungsform nach Figur 6a eines erfindungsgemäßen Verbrennungsmotors mit einer vierten Stellung des Rotors und der Ventileinrichtungen;
- Fig. 7: eine schematische Darstellung einer Ausführungsform einer gekühlten Ventileinrichtung in einer Schnittansicht;
- Fig. 8: eine schematische Darstellung eines Ausschnitts einer Ausführungsform eines Rotors mit einem radialen Vorsprung;
- Fig. 9: eine schematische Darstellung einer Ausführungsform einer erfindungsgemäßen Ventileinrichtung mit einem Abdichtelement in einer Schnittansicht; und
- Fig. 10: eine schematische Darstellung einer Ausführungsform eines erfindungsgemäßen Verfahrens in einem Blockschema.

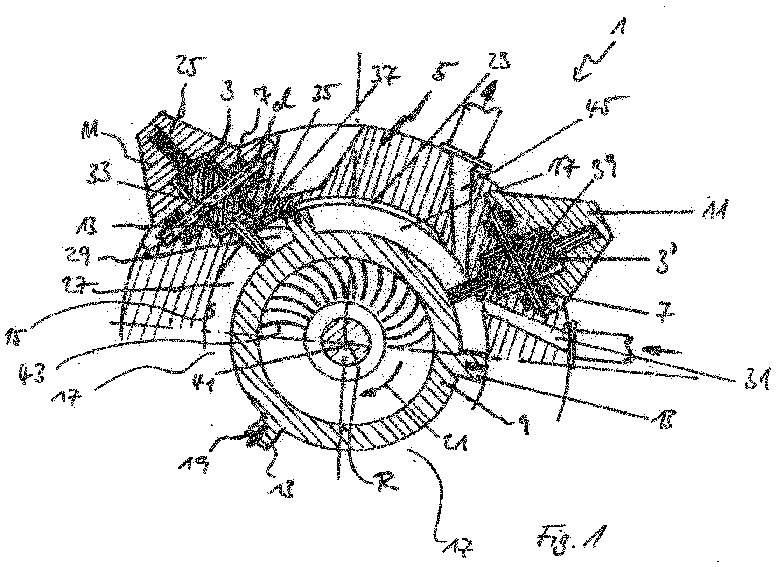

Die Erfindung wird vorliegend anhand eines Verbrennungsmotors erläutert, der für sechs Zündungen pro Umdrehung ausgelegt ist. Die Fig. 1 zeigt eine schematische Schnittdarstellung einer oberen Hälfte eines derartigen Verbrennungsmotors 1, der zwei Ventileinrichtungspaare aufweist, von denen eines in der Fig. 1 dargestellt ist. Das Ventileinrichtungspaar umfasst eine Ventileinrichtung 3 und eine Abgas-Ventileinrichtung 3'.
Die Ventileinrichtung 3 und die Abgas-Ventileinrichtung 3' sind in dem Gehäuse 5 in entsprechenden Aussparungen drehbar mittels Lagern 7 gelagert. Die Drehachse d der Ventileinrichtungen erstreckt sich im vorliegenden Ausführungsbeispiel im Wesentlichen senkrecht zu einer Drehachse R des Rotors 9, die sich senkrecht zur Bildebene der Fig. 1 erstreckt. Zur Aufnahme der Ventileinrichtungen 3, 3' kann das Gehäuse 5 jeweils einen entsprechenden Vorsprung 11 aufweisen. Dieser Vorsprung kann beispielsweise mittels Schrauben oder dergleichen Befestigungsmaterial mit dem übrigen Gehäuse 5 verbunden sein, so dass ein Zugang zu den Ventileinrichtungen gewährleistet ist.

Der Antrieb der Ventileinrichtungen 3, 3', d.h. ihre Drehung um die Drehachse d erfolgt elektrisch oder mechanisch in Abhängigkeit von der Drehzahl des Rotors. Ein mechanischer Antrieb kann beispielsweise durch eine mechanische Kopplung der Ventileinrichtungen 3, 3' mit dem Rotor bzw. mit einer durch den Rotor angetriebenen Antriebswelle erfolgen. Zwischen den Rotor bzw. die Antriebswelle und die Ventileinrichtungen kann auch ein Getriebe geschaltet sein, das die Drehgeschwindigkeit der Ventileinrichtungen 3, 3' relativ zu dem Rotor 9 einstellt. Andererseits ist auch eine elektronische Regelung der Drehgeschwindigkeit der Ventileinrichtungen 3, 3' in Abhängigkeit von der Rotordrehzahl grundsätzlich denkbar.

Der Rotor 9 des Verbrennungsmotors 1 weist im vorliegenden Ausführungsbeispiel drei radiale Vorsprünge 13 auf, die zusammen mit dem Rotor 9 und dem Gehäuse 5 bzw. mit einer Innenwandung 15 des Gehäuses jeweils Brennkammern 17 bilden. Mit den drei resultierenden Brennkammern und den zwei Ventileinrichtungspaaren (d.h. zwei Ventileinrichtungen 3 und zwei Abgas-Ventileinrichtungen 3') lassen sich die eingangs erwähnten sechs Zündungen pro Umdrehung realisieren. Für mehr oder weniger Zündungen pro Umdrehung muss die Anzahl der Ventilpaare und der Brennkammern entsprechend angepasst werden.

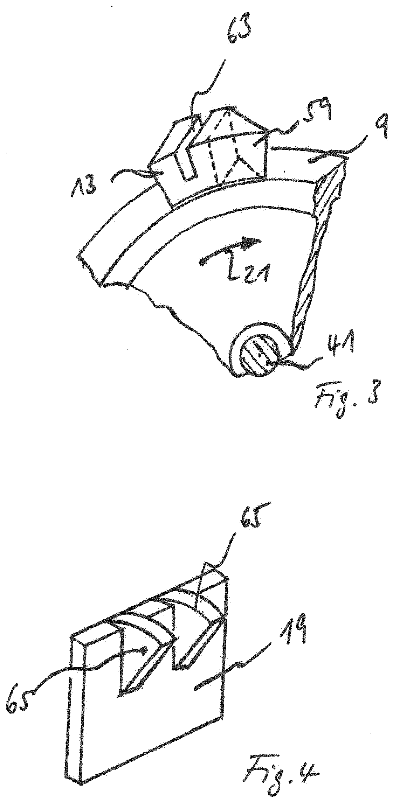

Zur Erweiterung der Drehmoment-Wirkungsfläche der Brennkammern 17 während der Verbrennung und zur Abdichtung der Brennkammern voneinander, sind die radialen Vorsprünge 13 im vorliegenden Ausführungsbeispiel mit lamellenartigen Erweiterungselementen 19 versehen, die in Fig. 1 andeutungsweise erkennbar sind. Sie bilden Verlängerungen der radialen Vorsprünge 13 des Rotors 9 in der radialen Richtung. Denkbar ist es grundsätzlich jedoch auch, die lamellenartigen Erweiterungen derart anzuordnen, dass sie die radialen Vorsprünge in einer axialen Richtung (d.h. in Richtung der Rotordrehachse R) verlängern. Zur Aufnahme der lamellenartigen Erweiterungselemente 19 und zur Führung derselben weist das Gehäuse 5 an seiner dem Rotor 9 zugewandten Innenwandung 15 wenigstens eine Vertiefung 23 auf. Sofern lamellenartige Erweiterungselemente auch in der axialen Richtung vorgesehen sind, die auch als "Seitenlamellen" bezeichnet werden, können diese in entsprechenden Vertiefungen in den Seitenteilen des Gehäuses 5 geführt sein. Die Wirkung der lamellenartigen Erweiterungselemente 19 kann durch die Zentrifugalkräfte während der Drehung des Rotors 9 oder durch Druckfedern angeregt werden. Eine detailliertere Beschreibung der radialen Vorsprünge 13 und der lamellenartigen Erweiterungselemente 19 erfolgt anhand der Fig. 3 und 4.

Es sei an dieser Stelle darauf hingewiesen, dass weder die lamellenartigen Erweiterungselemente 19 noch die Vertiefung 23 zwingend vorgesehen sein müssen. Vielmehr kommt ein anderes Ausführungsbeispiel der Erfindung ohne diese Elemente aus. Dadurch werden insbesondere bei größeren Drehzahlen anfällige Verschleißelemente eliminiert.

Die Ventileinrichtung 3 ist als Kreisventil ausgebildet und umfasst im vorliegenden Ausführungsbeispiel eine im Wesentlichen kreisförmige Ventilscheibe 25, die drehbar um die Drehachse d gelagert ist. Die Ventilscheibe ist derart angeordnet und ausgebildet, dass sie mit der Drehachse R in einer gemeinsamen Ebene liegt und zumindest bereichsweise in die Brennkammer 17 hineinragt. Dabei ergibt sich zeitweise eine Überlappung in der radialen Richtung (d.h. in der Querrichtung zur Drehachse R des Rotors 9) mit den radialen Vorsprüngen 13 des Rotors 9. Durch die Ausgestaltung der Ventilscheibe 25 und deren drehbare Lagerung, kann eine Brennkammer 17 zeitweise, wie in dem in Fig. 1 dargestellten Betriebszustand der Fall ist, in eine Kompressionskammer 27 und eine Zündkammer 29 unterteilt werden, die im Wesentlichen gasdicht voneinander getrennt sind. Weiterhin kann zeitweise eine Gasverbindung zwischen der Zündkammer 29 und der Kompressionskammer 27 realisiert werden und ein radialer Vorsprung des Rotors kann durch eine geeignete Ausgestaltung der Ventilscheibe die Ventileinrichtung passieren.

In die Kompressionskammer 27 mündet ein in der Fig. 1 nur rechts im Bild dargestellter Zufuhrkanal zur Zufuhr eines Gases oder eines Verbrennungsgemisches, insbesondere eines Brennstoff-Luftgemisches oder von Luft. Diese (Frisch-)Luft (oder Verbrennungsgemisch) wird bei einer fortschreitenden Drehung des Rotors 9 und damit der radialen Vorsprünge 13 in den Kompressionskammern 27 verdichtet. In der Drehrichtung 21 des Rotors 9 gesehen ist ein weiterer Zufuhrkanal (nicht gezeigt) vor der in Fig. 1 gezeigten Ventileinrichtung 3 angeordnet. Ferner ist in der Drehrichtung 21 gesehen, unmittelbar nach der Ventileinrichtung 3 eine Zündmulde 33 angeordnet, in die ein Kraftstoff-Zufuhrsystem 35 und ein Zündsystem 37 mündet. In dem in Fig. 1 gezeigten Betriebszustand des Verbrennungsmotors unterteilt die Ventileinrichtung 3 die Brennkammer 17 in eine Kompressionskammer 27 und eine Zündkammer 29, wobei die Zündkammer 29 die Zündmulde aufweist. Die Zündkammer wird begrenzt von dem Rotor 9, dem Gehäuse 5, der Ventilscheibe 25 und dem radialen Vorsprung 13. In diesem Betriebszustand erfolgt die Einspritzung von Kraftstoff, der daraufhin durch das Zündsystem 37 gezündet wird. Die resultierende Expansion des Luft-Kraftstoff-Gemisches in der Zündkammer 29 führt durch die thermodynamische Kraft der Verbrennung zu einer Verlagerung des Rotors 9 in der Drehrichtung 21. Die Verbrennungskraft wirkt dabei abstoßend auf die geschlossene Fläche der Ventilscheibe.

Zwischen der Ventileinrichtung 3 und der Abgas-Ventileinrichtung 3' ist ein Abluftkanal 45 vorgesehen, der in der Drehrichtung 21 des Rotors 9 gesehen, der Zündmulde 33 nachgeordnet ist. Über den Abluftkanal 45 kann das verbrannte Gas aus der Zündkammer 29 abgeführt werden. Dabei kann vorgesehen sein, dass der Abluftkanal 45 in Fluidverbindung mit dem Zufuhrkanal 31 steht, so dass zumindest ein Teil der Abluft bzw. des Abgases dem Frischluftkanal zugeführt wird.

Zum Schutz der Wellenlagerung der Ventileinrichtung 3 vor heißen Abgasen sowie zur Abdichtung der Verbrennungs- und Auspuffbereiche nach außen hin, wird die Ventileinrichtung 3 mit zylindrischen Stufen für den Einbau von Kolbenringen/Abdichtungsringen 39 versehen. Die Abgas-Ventileinrichtung 3' schließt zunächst die Verbindung zwischen dem Abluftkanal 45 und dem Zufuhrkanal 31. Erst wenn sich der radiale Vorsprung 13 in der Drehrichtung 21 gesehen kurz vor der Abgas-Ventileinrichtung 3' befindet, öffnet diese die Verbindung zwischen dem Abluftkanal 45 und dem Zufuhrkanal 31, sodass der radiale Vorsprung 13 sich über die Abgas-Ventileinrichtung 3' hinwegbewegen kann.

Der Rotor 9 weist im vorliegenden Ausführungsbeispiel noch eine mit der Antriebswelle 41 des Rotors 9 gekoppelte Turbine 43 auf. Die Turbine wird dabei mittels am Gehäuse gelagerter Leitschaufeln von den Abgasen aus der Zündkammer 29 angetrieben. Dadurch werden die Leistung und der Wirkungsgrad des Verbrennungsmotors gesteigert. In dieser Konstruktionsweise kann der Verbrennungsmotor, z.B. Turbo-Prop-ähnlich, nur als Turbolader oder auch in Kombination mit dem Verbrennungsmotor eingesetzt werden.

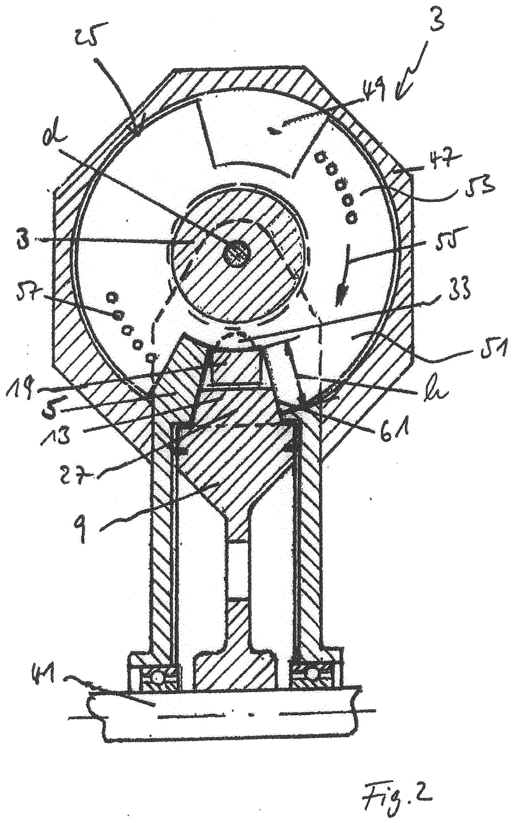

Die Ausgestaltung der Ventileinrichtung 3 wird im Folgenden anhand der Schnittdarstellung gemäß Fig. 2 näher erläutert. Dabei wird deutlich, dass die Ventilscheibe 25 in einer Ventilkappe 47 gelagert ist. Durch ihre drehbare Lagerung kann sie verschiedene Positionen bezüglich der Drehachse d annehmen, sodass je nach Drehposition verschiedene Abschnitte der Ventilscheibe im Bereich der Brennkammer angeordnet sind. Die Ventilscheibe 25 umfasst zwei Rotor-Durchlassabschnitte 49, zwei Schließabschnitte 51 und zwei Gas-Durchlassabschnitte 53. Die einzelnen Abschnitte sind jeweils symmetrisch bezüglich der Drehachse d angeordnet. In einer Drehrichtung 55 der Ventilscheibe 25 folgt ein Schließabschnitt 51 auf einen Rotor-Durchlassabschnitt 49 und ein Gas-Durchlassabschnitt 53 folgt auf einen Schließabschnitt 51.

Der Rotor-Durchlassabschnitt 49 wird durch eine materialfreie Aussparung gebildet, die zwischen dem Schließabschnitt 51 und dem Gas-Durchlassabschnitt 53 angeordnet ist. Um ein reibungsloses Passieren des radialen Vorsprungs durch den Rotor-Durchlassabschnitt zu gewährleisten, ist dieser breiter (in der Drehrichtung 55) ausgebildet als der Rotor 9 in der axialen Drehachsenrichtung R (s. Fig. 2). Auf diese Weise kann sich die Ventilscheibe auch während des Passierens des radialen Vorsprungs 13 weiterdrehen, ohne, dass die Ventilscheibe eine Drehbewegung des Rotors 9 blockiert. Die Drehgeschwindigkeit der Ventilscheibe 25 ist derart mit der Drehgeschwindigkeit des Rotors 9 abgestimmt, dass sich ein Rotor-Durchlassabschnitt 49 dann im Bereich der Brennkammer 17 befindet, wenn sich auch der radiale Vorsprung 13 des Rotors 9 zumindest nahe der Ventileinrichtung 3 befindet.

Während der Schließabschnitt 51 durch eine geschlossene, gasundurchlässige Fläche gebildet wird, umfasst der Gas-Durchlassabschnitt 53 ein gasdurchlässiges Material, welches düsenartige Öffnungen 57 zur Herstellung einer Gasverbindung zwischen der Kompressionskammer 27 und der Zündkammer 29 aufweist. Die Anzahl, Ausgestaltung und auch die Größe der düsenartigen Öffnungen 57 können je nach Anwendungsfall variieren. Insbesondere können die Öffnungen 57 rückschlaggesichert, beispielsweise durch Rückschlagventile, ausgeführt sein. Die Ausgestaltung kann dabei je nach dem erforderlichen Luft-Massenstrom für die Nachverbrennung variiert werden. Die Größe der düsenförmigen Öffnungen kann auch mechanisch, durch Fliehkräfte oder auch elektromagnetisch variiert werden. Für das Einspritzen der komprimierten Luft aus der Kompressionskammer 27 in die Zündkammer 29 können auch druckgesteuerte Kanäle vorgesehen sein, die unter dem Boden der Kompressionskammer oder auch seitlich im Gehäuse die Luft an den Ventilen vorbei in die Zündkammer transportieren.

Anders als die Ventileinrichtung 3 weist die Abgas-Ventileinrichtung 3' nur einen (oder mehrere) Schließabschnitt(e) und einen (oder mehrere) Rotor-Durchlassabschnitt(e) auf. Sofern mehrere Schließ- und Rotor-Durchlassabschnitte vorgesehen sind, sind diese beispielsweise abwechselnd hintereinander angeordnet. Die Abgas-Ventileinrichtung 3' weist folglich keinen Gas-Durchlassbereich auf, denn nachdem ein radialer Vorsprung die Abgas-Ventileinrichtung 3' passiert hat, muss die Verbindung zwischen dem Abluftkanal 45 und dem Zufuhrkanal 31 wieder geschlossen werden.

Die Fig. 3 zeigt einen Rotor 3 mit einem radialen Vorsprung 13 und eine Verzahnungsspitze 59, die mit einer Seitenwand 61 des Schließabschnitts 51 in Eingriff kommen kann. Die Verzahnungsspitze 59 und der radiale Vorsprung 13 sind vorzugsweise einstückig miteinander verbunden. Die Verzahnungsspitze 59 kann mit der einrückenden Seitenwand 61 der Ventileinrichtung 3 ineinandergreifen, um eine bessere Entleerung der Kammern zu bewirken. Auf seiner dem Rotor 9 abgewandten Seite weist der radiale Vorsprung 13 eine sich radial erstreckende Aufnahmemulde 63 zur Aufnahme der lamellenartigen Erweiterungselemente 19 auf. Das lamellenartige Erweiterungselement ist in der Detaildarstellung gemäß Fig. 4 gezeigt. Das lamellenartige Erweiterungselement 19 umfasst bei der dort gezeigten Ausführungsform zwei Gleitschuhe 65, die zur Überbrückung der Ventileinrichtungsöffnungen im Gehäuse dienen.

Die Funktionsweise des Verbrennungsmotors und der Ventileinrichtung 3 ist wie folgt: Die Ventileinrichtung 3 bzw. deren Drehbewegung wird derart mechanisch oder elektrisch angetrieben, dass die radialen Vorsprünge des Rotors bei dessen Drehung synchron durch die Rotor-Durchlassbereiche 49 der Ventileinrichtung 3 passieren können. Durch die Drehbewegung des Rotors 9 komprimieren die radialen Vorsprünge 13 ein durch den Zufuhrkanal 31 unter hohem Druck zugeführtes Gas, insbesondere Frischluft, in der Brennkammer 17 noch weiter. Die Rotor-Durchlassbereiche der Ventileinrichtung 3 sind so (breit) ausgelegt, dass nach dem Passieren des radialen Vorsprungs 13 des Rotors 9 die Zündkammer 29 mit einer bestimmten Verspätung durch den Schließabschnitt 51 geschlossen wird. Durch die verspätete Schließung der Zündkammer wird eine gewisse Masse von Frischluft, die unter Druck steht, für die Zündung in die Zündkammer geleitet und dort eingeschlossen. Nach dem Passieren des radialen Vorsprungs 13 durch den Rotor-Durchlassabschnitt 49 und die darauffolgende Schließung der Zündkammer 29 durch die weitere Drehbewegung der Ventileinrichtung 3 und Abschließen der Zündkammer 29 mittels des Schließabschnitts 51 unter Einbezug von Kompressionsluft aus der Kompressionskammer 27, erfolgt die Einspritzung von Kraftstoff durch das Kraftstoff-Zufuhrsystem 35 und die anschließende Zündung des Kraftstoff-Luft-Gemisches durch das Zündsystem 37. Durch die Zündung wird eine Kraft auf den radialen Vorsprung 13 ausgeübt, die einen Drehimpuls auf den Rotor 9 überträgt. Durch die lamellenartigen Erweiterungen wird die Angriffsfläche und damit der Drehimpuls noch vergrößert. Die Expansion der Zündkammer bewirkt darüber hinaus die weitere Kompression der vorhandenen Druckluft in der Kompressionskammer 27, da der Rotor 9 weiterbewegt wird und sich die Kompressionskammer in der Folge verkleinert. Die Ventileinrichtung 3 ist in der Drehrichtung 55 nach einem bestimmten Winkelsektor mit dem Gas-Durchlassabschnitt 53 versehen. Nach der Zündung und dem Weiterdrehen der Ventileinrichtung 3 kommt dieser zum Einsatz und ermöglicht den Zufluss von komprimierter Luft aus der Kompressionskammer 27 in die Zündkammer 29. Die Nachverbrennung in der Zündkammer 29 wird dadurch weiter unterstützt und vervollständigt. Auch können wiederholte Einspritz- und Zündungsvorgänge vorgesehen sein, die nach der "Hauptzündung" im expandierten Zustand der Zündkammer durchgeführt werden. Das Kompressionsverhältnis zwischen Zündkammer 29 und Kompressionskammer 27 kann durch die Weite des Schließwinkels des Schließabschnitts 51 der Ventileinrichtung 3 gesteuert werden. Der weitere Kompressionsgrad der Druckluft in der Kompressionskammer 27 wird durch den Zeitpunkt des Düseneinsatzes, d.h. des Einsatzzeitpunktes des Gas-Durchlassbereichs mittels der Breite bzw. der Winkelgröße des Gas-Durchlassbereichs in der Drehrichtung 55 bestimmt.

Die Ventileinrichtungen 3, 3' sind mittels der Lager 7 im Gehäuse 5 so gelagert, dass sich die Kreisbahn der Ventilscheibe 25 mit der Kreisbahn der radialen Vorsprünge 13 des Rotors 9 in einem Bereich mit der Höhe h überschneiden. Diese Höhe h entspricht der Höhe der Zündkammern 29 und der Kompressionskammern 27 in der radialen Richtung des Rotors 9. Sie bestimmt darüber hinaus die Höhe des radialen Vorsprungs 13 und die radiale Höhe der Rotor- Durchlassabschnitte.

Die oben beschriebene Ausführung einer Ventileinrichtung 3 mittels einer kreisförmigen Ventilscheibe stellt lediglich ein bevorzugtes Ausführungsbeispiel dar. Denkbar ist vielmehr auch eine Ausgestaltung der Ventileinrichtung, bei der die Größe der düsenartigen Öffnungen 57 je nach dem erforderlichen Luft-Massenstrom für die Nachverbrennung variiert werden kann. Hierzu kann die Ventileinrichtung beispielsweise zwei aneinander anliegenden Scheiben oder Gas-Durchlassabschnitte aufweisen, deren Winkel zueinander verändert wird, oder mittels Düsenblenden, die mechanisch oder elektromagnetisch bewegt werden. Auch könnte die Ventileinrichtung 3 aus zwei in sich entgegengesetzten Richtungen drehenden Scheiben bestehen, um die Schließzeit der Kammern zu kürzen. Die Düsen entstehen in diesem Fall durch Überlappungen von Öffnungen. Die Schließzeit der Kammern ist dann doppelt so hoch wie bei der Gestaltung mit nur einer Ventilscheibe.

Die Ventileinrichtungen werden vorzugsweise von der Antriebswelle unter Verwendung einer bestimmten Drehzahlübersetzung mechanisch oder elektrisch angetrieben, wobei die Übersetzung je nach Anzahl der radialen Vorsprünge 13 und der Anzahl der Rotor-Durchlassbereiche 49 variiert. Der Antrieb der Wellen der Ventileinrichtung 3 und der Abgas-Ventileinrichtung 3' kann paarweise oder getrennt pro Zündkammer, mittels Wellen mit Wellengelenken, Getrieberädern oder mittels flexibler Wellen erfolgen.

Der Verbrennungsmotor 1 kann darüber hinaus druckgesteuerte Seitendüsen im Gehäuse 5 aufweisen, die vor der Ventileinrichtung 3 angeordnet sind und die über Kanäle die Druckluft positionsgenau in die Zündkammer 29 liefern. Dabei können die Kanäle auf der Seite der Zündkammer gegen einen Rückstoß gesichert sein. Weiterhin können druckgesteuerte Kanäle unterhalb der Zündkammer 29 vorgesehen sein, die beim Erreichen eines bestimmten Drucks in einer Druckkammer die Druckluft in die Zündkammer liefern. Die Druckeinstellung der Kanäle wird dann so eingestellt, dass beim Evakuierungsvorgang der Zündkammer 29 die Weiterleitung der Abgase durch die Kanäle in die Frischluftkammer unterbunden wird. Hierzu könnte die "Durchlass-DruckEinstellung" der Kanäle beispielsweise drehzahlabhängig erfolgen.

Weiterhin kann vorgesehen sein, dass die in der Kompressionskammer 27 generierte Druckluft zumindest teilweise in einem Druckluftbehälter oder dergleichen Speichereinrichtung zwischengespeichert wird. Die gespeicherte Druckluft kann dann zur Einspritzung in die Zündkammer 29 und/oder für das Anlassen des Motors verwendet werden.

Die kreisförmige Ventilscheibenausbildung der Ventileinrichtung 3 stellt wie gesagt ein bevorzugtes Ausführungsbeispiel der Erfindung dar. Denkbar ist es jedoch auch, das Kreisventil als "Lochband" auszubilden, welches "linear transversal" die Kammer durchläuft. Das Band weist dann wiederum einen entsprechenden Rotor-Durchlassabschnitt, einen Schließabschnitt und einen Gas-Durchlassabschnitt auf. Der Antrieb eines derartigen "Lochbandes", das schieberartig ausgebildet sein kann, kann wiederum über eine drehbar gelagerte Ventileinrichtung 3 erfolgen, die nach Art eines Pleuels eine Verlagerung des Lochbandes bewirkt. Das Band kann kontinuierlich oder rollengeführt ausgebildet sein, insbesondere in Topfform oder als Streifen. Auch die Verlagerung einer derartigen schieberartigen Ventileinrichtung 3 muss synchron mit der Rotation des Rotors verlaufen. Weiterhin ist es denkbar, den Verbrennungsmotor in einer linearen Ausführung auszubilden, der die oben erläuterten Elemente aufweist. Der Verbrennungsmotor kann dann als "Schienengebilde" über eine bestimmte Länge oder mit auf "Ketten" montierten einzelnen Einheiten erfolgen.

Sämtliche im Zusammenhang mit den Figuren 1 bis 4 beschriebenen Ausführungsformen, insbesondere der Ventileinrichtung 3, beziehen sich sinngemäß auch auf die nachfolgend beschriebenen Ausführungsformen eines erfindungsgemäßen Verbrennungsmotors 1 mit ersten und zweiten Teilventileinrichtungen 81, 82.

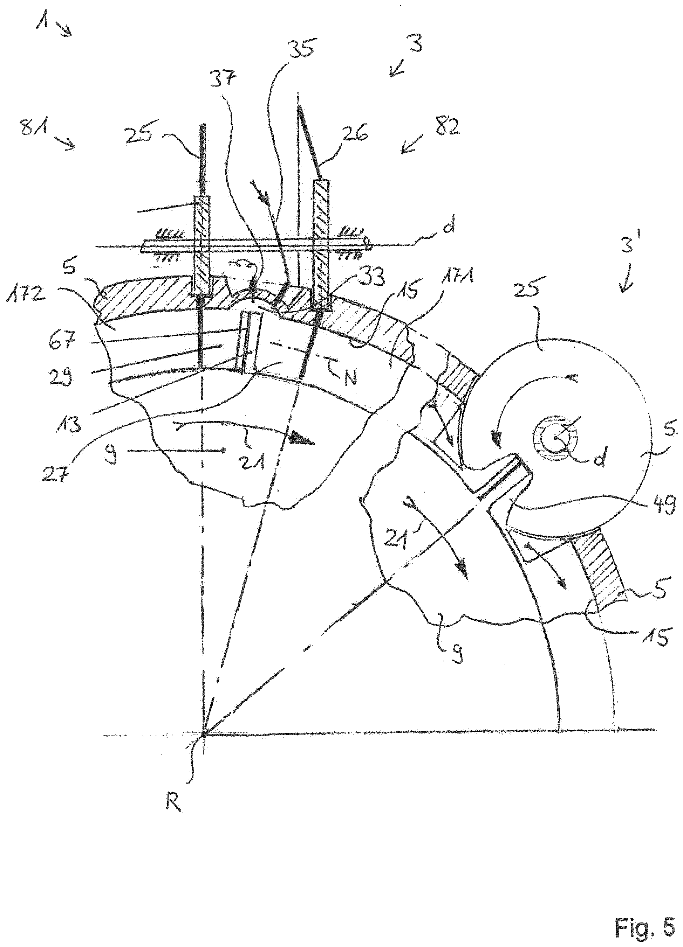

Fig. 5 zeigt je eine Teilschnittansicht einer erfindungsgemäßen Ventileinrichtung 3 (links dargestellt), die auch als eine Zünd-Ventileinrichtung bezeichnet werden könnte, und einer erfindungsgemäßen Abgas-Ventileinrichtung 3' (rechts dargestellt) und deren Anordnung relativ zum Rotor 9 eines erfindungsgemäßen Verbrennungsmotors 1, wie er im Zusammenhang mit Fig. 1 bereits beschrieben wurde. Die in Zusammenhang mit Fig. 1 beschriebenen Vertiefungen 23 sind in diesen Ausführungsformen des Gehäuses 5 nicht dargestellt, können aber vorgesehen sein. Vorsprünge 11 bzw. Ventilkappen 47, die auch separat für je eine Teilventileinrichtung 81, 82 vorgesehen sein können, sind nicht dargestellt.

Die Ventileinrichtung 3 ist in Fig. 5, im Gegensatz zur Ausführungsform in Figur 1, als eine Doppelventileinrichtung mit einer ersten Teilventileinrichtung 81 und einer zweiten Teilventileinrichtung 82, die hier als Kreisventile ausgebildet sind, ausgeführt. Die Teilventileinrichtungen 81, 82 sind hier auf einer gemeinsamen Drehachse d angeordnet, wobei auch zwei unterschiedliche Drehachsen d, die auch getrennt voneinander angetrieben, vorzugsweise auf getrennten Wellen gelagert, sein könnten, denkbar wären. Die erste Teilventileinrichtung 81 ist hier mit einer kreisförmigen Ventilscheibe 25 ausgeführt, während die zweite Teilventileinrichtung 82 eine tellerförmige Ventilscheibe 26 aufweist, die so ausgerichtet ist, dass der äußere Tellerrand in radialer Richtung des Rotors 9 ausgerichtet ist, wobei die Oberflächennormale N des äußeren Randes der tellerförmigen Ventilscheibe 26 parallel zur Drehrichtung 21 des Rotors 9 verläuft. Die zweite Teilventileinrichtung 82 ist in Drehrichtung 21 des Rotors 9 gesehen vor der ersten Teilventileinrichtung 81 angeordnet, wobei sich dazwischen die Zündmulde 33 befindet. Der Rotor 9 weist hier einen radialen Vorsprung 13 ohne lamellenartige Erweiterungselemente 19, dafür mit einer Umfangsrille 67 auf, die in den Seitenwänden 61 und der Kopffläche 62 des radialen Vorsprungs 13 ausgebildet ist. Die Umfangsrille 67 ist hier als eine Luft-Labyrinth-Dichtung ausgestaltet. Der radiale Vorsprung 13 bzw. der Rotor 9 ist mit sehr geringen Einbautoleranzen an das Gehäuse 5 angepasst, so dass nur ein minimales Spiel zwischen den Seitenwänden 61 und der Kopffläche 62 des radialen Vorsprungs 13 und der Innenwandung 15 des Gehäuses 5 besteht. Der radiale Vorsprung 13 trennt eine erste Verbrennungskammer 171 von einer zweiten Verbrennungskammer 172 im Wesentlichen fluiddicht ab, wenn der radiale Vorsprung 13 nicht, wie in Fig. 5 allerdings gezeigt, im Bereich der Zündmulde 33 positioniert ist. In der gezeigten Position des Rotors 9 bzw. des radialen Vorsprungs 13 stellt die Zündmulde 33 eine Fluidverbindung zwischen der ersten Brennkammer 171 zu der zweiten Brennkammer 172 in Form eines Umgehungsspalts um den Kopfbereich bzw. die Kopffläche 62 des radialen Vorsprungs 13 dar.
Die in Fig. 5 dargestellte Abgas-Ventileinrichtung 3' unterscheidet sich von der in Fig. 1 dargestellten Ausführungsform vor allem darin, dass ihre Drehachse d nicht senkrecht zur Drehachse R des Rotors steht, sondern parallel dazu verläuft. Auch in dieser Ausführungsform greift ein radialer Vorsprung 13 mit einem Rotor-Durchlassabschnitt 49 aufeinander abgestimmt ineinander ein, so dass sich der radiale Vorsprung 13 an der Abgas-Ventileinrichtung 3' vorbeidrehen bzw. diese passieren kann. Allerdings ist es denkbar, dass aufgrund einer geringeren Abdichtwirkung einer solchen Ausführungsform geringe Mengen von Abgas von einer Seite der Abgas-Ventileinrichtung 3 zu der anderen Seite strömen können. Die Abgas-Ventileinrichtung 3' ist zwischen dem Zufuhrkanal 31 und dem Abluftkanal 45 angeordnet, wobei in Fig. 5 durch Pfeile das Ausströmen von Abgas bzw. das Einströmen von Frischluft oder einem Abgas-/Frischluftgemisch durch dreiecksförmig dargestellte Kanalöffnungen angedeutet ist. Im vorliegenden Fall weist die kreisförmige Ventilscheibe 25 einen einzigen Rotor-Durchlassabschnitt 49 auf, wobei die restliche Ventilscheibe 25 durch einen Schließabschnitt 51 gebildet wird. Bei drei über den Umfang des Rotors 9 vorgesehenen radialen Vorsprüngen 13 ergibt sich folglich ein Drehzahlverhältnis zwischen der Abgas-Ventileinrichtung 3' und dem Rotor 9 von 3:1. Die Abgas-Ventileinrichtung 3' kann in dieser Ausführungsform besonders einfach, beispielsweise durch eine Kopplung, an die Antriebswelle 41 des Rotors 9, mit einer entsprechenden Übersetzung angetrieben werden.

Die Ventileinrichtung 3 könnte auch mit Teilventileinrichtungen 81, 82 ausgeführt sein, bei denen die Ventilscheiben 25, 26 als entgegengesetzt rotierende Doppelscheiben ausgeführt sind. Dadurch könnten die Öffnungs- und Schließungszeiten der jeweiligen Teilventileinrichtungen 81, 82 bei geeigneter Abstimmung halbiert werden, die Teilventileinrichtungen 81, 82 also schneller umschalten. In diesem Fall könnten auch Verzahnungsspitzen 59 an den radialen Vorsprüngen 13 vorgesehen sein (wie in Fig. 3 dargestellt), wobei die Verzahnungsspitze 59 in axialer Richtung des Rotors 9 mittig zum radialen Vorsprung 13 auszubilden wäre, damit ein genaueres Ineinandergreifen des radialen Vorsprungs 13 mit den Rotor-Durchlassabschnitten 49 jeder der beiden Doppelscheiben und somit eine bessere Abdichtung einer Teilventileinrichtung 81, 82 erreicht würde.

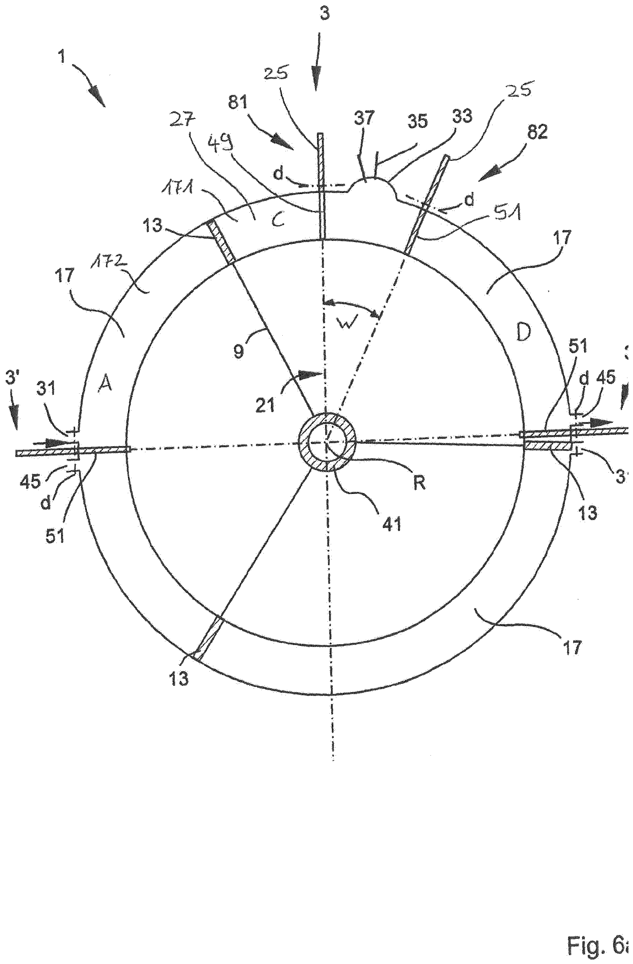

In den Fig. 6a bis 6d ist jeweils eine Stellung des Rotors 9 und der Ventileinrichtungen 3, 3' eines erfindungsgemäßen Verbrennungsmotors 1, wie er in Zusammenhang mit Fig. 5 beschrieben wird, dargestellt. Die Funktionsweise der erfindungsgemäßen Ventileinrichtung 3 in Form einer Doppelventileinrichtung als eine Druckschleuse wird mit Hilfe der Fig. 6a bis 6d nachfolgend detailliert erläutert. Der zwischen den als Kreisventile ausgeführten Teilventileinrichtungen 81 und 82 eingeschlossene Raum dient, wie eine Schleuse, zum Durchlassen der radialen Vorsprünge 13 des Rotors 9 unter möglichst guter Erhaltung des in einer ersten Brennkammer 171 vorhandenen Druckniveaus für einen nachfolgenden Zündvorgang in der ersten Brennkammer 171. Dabei wird die zuvor in der ersten Brennkammer 171 komprimierte Luft bzw. ein Luft-/Kraftstoffgemisch, über die Querschnittserweiterung der Zündmulde 33 von einem ersten Druckschleusenabschnitt vor dem radialen Vorsprung 13 in einen zweiten Druckschleusenabschnitt hinter dem radialen Vorsprung 13 verlagert, insbesondere verdrängt. In der in den Fig. 6a bis 6d gezeigten Ausführungsform mit einer Doppelventileinrichtung kann also vor dem radialen Vorsprung 13 in einer Kompressionskammer 27 komprimierte Druckluft entgegen der Drehrichtung 21 des Rotors 9 in eine Zündkammer 29 auf der Rückseite des radialen Vorsprungs 13 strömen. Dadurch wird ein höherer Zünddruck gewährleistet, so dass bei der nachfolgenden Expansion der radiale Vorsprung 13 einen Drehimpuls in Drehrichtung 21 erfährt und verschoben wird, um den Rotor 9 anzutreiben. Die Doppelventileinrichtung übt somit eine Druckschleusenfunktion aus, die den Wirkungsgrad und die Leistung des erfindungsgemäßen Verbrennungsmotors 1 erheblich steigern kann.

In den Fig. 6a bis 6d ist jeweils nur eine der Ventileinrichtungen 3 und der zugehörigen Zündmulden 33 gezeigt. Eine zweite Ventileinrichtung 3 ist punktsymmetrisch zur Drehachse R des Rotors 9 vorgesehen, damit bei einem Rotor 9 mit drei gleichmäßig über den Umfang verteilten radialen Vorsprüngen 13 mit zwei Zündmulden 33 und zwei als Doppelventileinrichtungen ausgeführten Ventileinrichtungen 3 sechs Zündungen pro Umdrehung des Rotors 9 stattfinden können. Die Drehachsen d der Ventileinrichtungen 3, 3' sind hier jeweils unabhängig voneinander senkrecht zur Drehachse R ausgeführt. Sie könnten aber auch gemäß Fig. 5 als eine gemeinsame Drehachse d für die Doppelventileinrichtung aus der ersten Teilventileinrichtung 81 und der zweiten Teilventileinrichtung 82 ausgeführt sein, bzw. im Falle der Abgas-Ventileinrichtungen 3' parallel zur Drehachse R verlaufen. Die erste Teilventileinrichtung 81 und die zweite Teilventileinrichtung 82 sind um einen Doppelventilwinkel W zwischen 20° und 35° in Drehrichtung 21 des Rotors 9 versetzt zueinander angeordnet. Über den Betrag des Doppelventilwinkels W kann das erreichbare Verdichtungsverhältnis des Verbrennungsmotors 1 eingestellt werden.

In der in Fig. 6a dargestellten Stellung des Rotors 9 sind die Abgas-Ventileinrichtungen 3' verschlossen. Die erste Teilventileinrichtung 81 ist geöffnet, während die zweite Teilventileinrichtung 82 geschlossen ist. Drei Brennkammern 17 werden durch die radialen Vorsprünge 13 voneinander getrennt, wobei bezogen auf den oben links dargestellten radialen Vorsprung 13 eine zweite Brennkammer 172, die den Ansaugsektor A umfasst, ausgebildet wird, und eine erste Brennkammer 171, die den Komprimierungssektor C und den Ausschiebesektor D umfasst, ausgebildet wird. Dabei erstreckt sich zwischen der linken Abgas-Ventileinrichtung 3' und dem radialen Vorsprung 13 ein Ansaugsektor A einer zweiten Brennkammer 172, in den durch den Zufuhrkanal 31 vorzugsweise vorkomprimierte Frischluft angesaugt wird, wie durch den Pfeil angedeutet. Das Druckniveau in dem Ansaugsektor A, der auch zum Turboladen verwendet werden kann, beträgt beispielsweise 1,5 bis 2,0 bar. Zwischen dem radialen Vorsprung 13 und dem Schließabschnitt 51 der zweiten Teilventileinrichtung 82 erstreckt sich ein Komprimierungssektor C einer ersten Brennkammer 171, in dem zuvor angesaugte Frischluft bei einer Volumenverkleinerung durch Rotation des Rotors 9 komprimiert wird. Zwischen dem Schließabschnitt 51 der zweiten Teilventileinrichtung 82 und dem Schließabschnitt 51 der rechten Abgas-Ventileinrichtung 3' erstreckt sich ein mit Abgas gefüllter Ausschiebesektor D, aus dem bereits expandiertes Abgas durch den Abluftkanal 45 ausgeschoben wird.

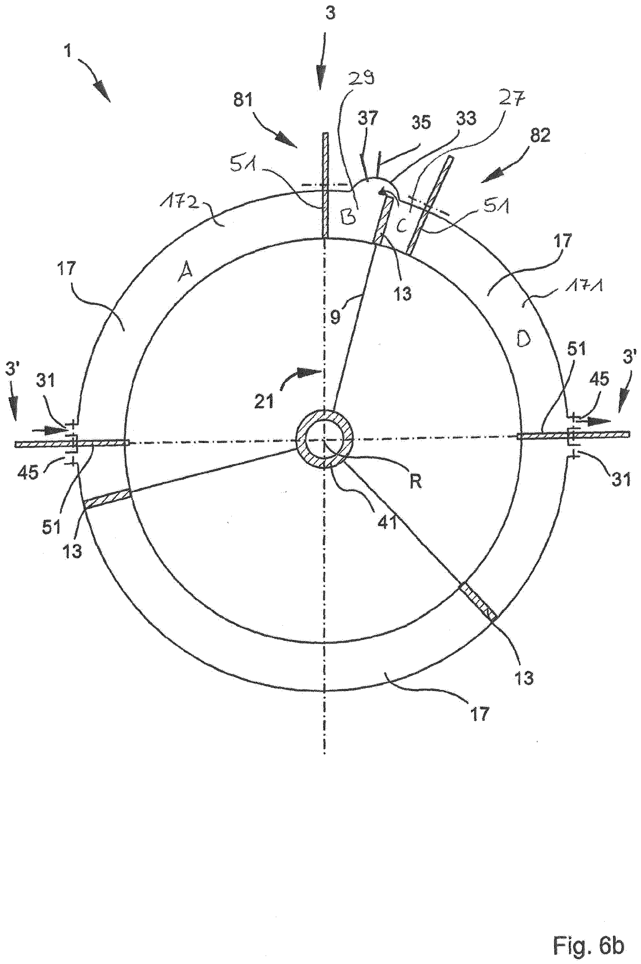

In der in Fig. 6b dargestellten Stellung des Rotors 9 ist dieser beispielhaft um ca. 40 Grad in Drehrichtung 21 weiterrotiert. Dabei hat der radiale Vorsprung 13 die erste Teilventileinrichtung 81 passiert, bzw. sich durch den Rotor-Durchlassabschnitt 49 hindurchgedreht, bevor sich die erste Teilventileinrichtung 81 durch ein Weiterdrehen der Ventilscheibe 25 geschlossen hat, so dass der Schließabschnitt 51 einen Zünd- und Expansionssektor B von einem Ansaugsektor A der zweiten Brennkammer 172 abtrennt. In Fig. 6b bildet die Doppelventileinrichtung eine Druckschleuse, in der ein erster Druckschleusenabschnitt in Form der Kompressionskammer 27 und ein zweiter Druckschleusenabschnitt in Form der Zündkammer 29 gebildet wird, wobei über die Zündmulde 33 eine Fluidverbindung zwischen den beiden Druckschleusenabschnitten bzw. der ersten Brennkammer 171 und der zweiten Brennkammer 172 besteht. Aufgrund der Druckdifferenz zwischen der rechten und der linken Seite des radialen Vorsprungs 13 und einer Verdrängungswirkung durch die Rotation des Rotors 9 strömt komprimierte Luft, wie durch den Pfeil angedeutet, von der Vorderseite des radialen Vorsprungs 13 auf dessen Rückseite. Eine solche Fluidverbindung könnte aber auch durch Seitenkanäle in dem Gehäuse 5, insbesondere dessen Innenwandung 15 oder einer seitlichen Wand vorgesehen sein. Das Druckniveau in dem Ansaugsektor A beträgt beispielsweise 1,5 bar, während das Druckniveau in dem Zünd- und Expansionssektor B beispielsweise 6 bis 8 bar beträgt. Mit dieser Ausführungsform kann beispielsweise ein Verdichtungsverhältnis von 4 bis 5 realisiert werden. Die zweite Teilventileinrichtung 82 ist in der gezeigten Stellung des Rotors 9 noch immer geschlossen und verhindert auf diese Weise, dass die in der ersten Brennkammer 171 aufgestaute Druckluft in den Ausschiebesektor D der ersten Brennkammer 171 entweicht, wie es bei der in Fig. 1 dargestellten Ausführungsform ohne eine Doppelventileinrichtung denkbar wäre. Durch eine Aktivierung des Kraftstoff-Zufuhrsystems 35 wird durch Einspritzung von Kraftstoff in die Zündkammer 29 ein zündbares Luft-/Kraftstoffgemisch hergestellt und nachfolgend durch Aktivierung des Zündsystems 37 gezündet, beziehungsweise das hier bereits vorhandene Luft-/Kraftstoffgemisch gezündet. Diese Zündung kann auch als Hauptzündung bzw. Erstzündung bezeichnet werden. Hier erfolgt eine Zündung bei einer Stellung des Rotors 9 im Winkel von etwa 17° zur ersten Teilventileinrichtung 81, wobei allgemein jeder Winkel zwischen der ersten Teilventileinrichtung 81 und der zweiten Teilventileinrichtung 82, insbesondere zwischen deren Ventilscheiben 25 bzw. 26, denkbar wäre, beispielsweise also ein Winkel zwischen 0° und 35°. Durch die chemische Verbrennungsreaktion und die damit verbundene thermische Expansion wirkt ein Impuls in Drehrichtung 21 auf die Rückseite des radialen Vorsprungs 13, so dass der Rotor 9 in Drehrichtung 21 angetrieben wird.

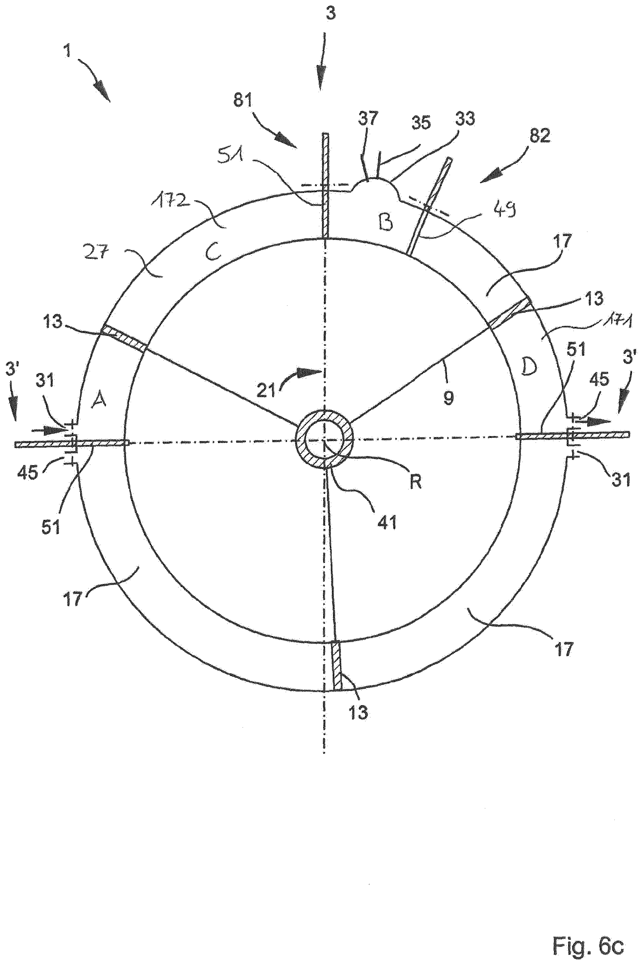

In der in Fig. 6c dargestellten Stellung des Rotors 9 ist dieser beispielhaft um weitere ca. 40 Grad in Drehrichtung 21 weiterrotiert. Die linke Abgas-Ventileinrichtung 3' war zwischenzeitlich geöffnet, um den nächsten radialen Vorsprung 13 des Rotors 9 passieren zu lassen. Die erste Teilventileinrichtung 81 wurde inzwischen geschlossen, so dass sie eine Kompressionskammer 27 bzw. einen Komprimierungssektor C der zweiten Brennkammer 172 begrenzt. Indem die zweite Teilventileinrichtung 82 unmittelbar nach bzw. während der Zündung geöffnet wird, bildet die zweite Brennkammer 172 einen im Wesentlichen mit Abgas gefüllten Zünd- und Expansionssektor B aus. Währenddessen erstreckt sich zwischen dem rechten radialen Vorsprung 13 und der rechten Abgas-Ventileinrichtung 3' ein Ausschiebesektor D, aus dem Abgase durch den Abluftkanal 45 weiter verdrängt werden.

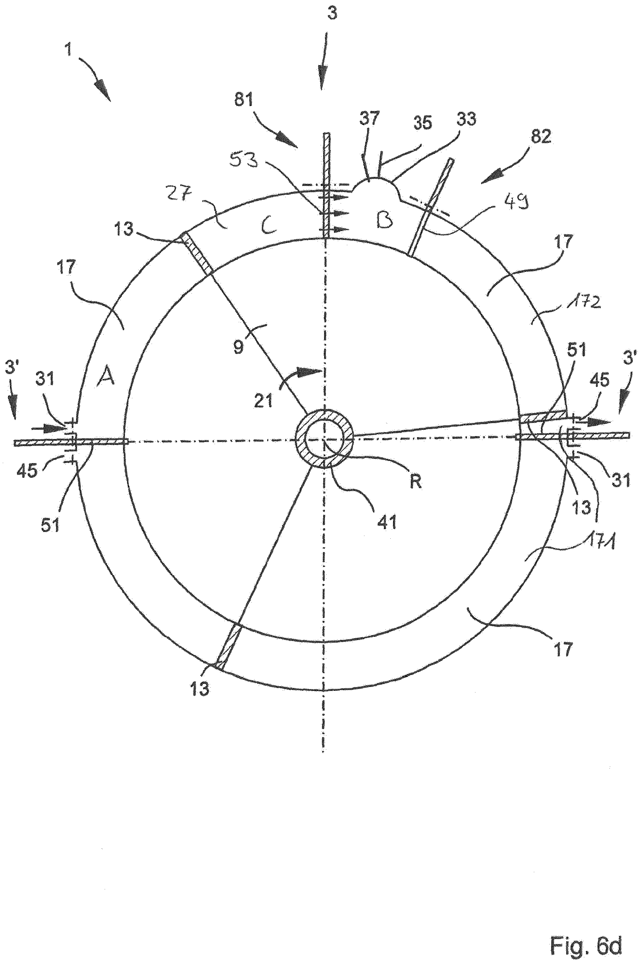

In der in Fig. 6d dargestellten Stellung des Rotors 9 ist dieser beispielhaft um weitere ca. 30 Grad in Drehrichtung 21 weiterrotiert. Inzwischen hat sich die erste Teilventileinrichtung 81 weitergedreht, so dass sich ein Gas-Durchlassabschnitt 53 innerhalb der zweiten Brennkammer 172 befindet. Dabei ist die zweite Teilventileinrichtung 82 noch geöffnet, tritt aber gleich in die Schließphase ein, indem sich der Rotor-Durchlassabschnitt 49 zugunsten des Schließabschnitts 51 aus dem Bereich der zweiten Brennkammer 172 herausdreht. Während dieser Phase kann durch düsenartige Öffnungen 57 in dem Gas-Durchlassabschnitt 53 der ersten Teilventileinrichtung 81 in der Kompressionskammer 27 komprimierte Luft durch die Ventilscheibe 25 der ersten Teilventileinrichtung 81 hindurch in den Bereich der Zündmulde 33 strömen bzw. in diesen eingespritzt werden. Unmittelbar nachfolgend kann sich durch Schließen der ersten Teilventileinrichtung 81 im Bereich der Zündmulde 33 ein weiteres Mal eine Zündkammer 29 bzw. einen Zünd- uns Expansionssektor B bilden, in dem eine Zweitzündung durchgeführt werden kann. Falls eine solche beschriebene Zweitzündung vorgesehen ist, sind die Ventilscheiben 25 bzw. 26 der Teilventileinrichtungen 81 bzw. 82 so aufeinander abzustimmen, dass die düsenartigen Öffnungen 57 kurz vor Schließung der zweiten Teilventileinrichtung 82 kurzzeitig komprimierte Luft in den Bereich der Zündmulde 33 durchlassen. Eine erste Teilventileinrichtung 81 kann beispielsweise mit nur einem Rotor-Durchlassabschnitt 49, Schließabschnitt 51 und Gas-Durchlassabschnitt 53 ausgeführt sein, während eine zweite Teilventileinrichtung 82 mit einem Rotor-Durchlassabschnitt 49 und einem Schließabschnitt 51 ausgeführt sein kann. Das Drehzahlverhältnis zwischen dem Rotor 9 und den Teilventileinrichtungen 81, 82 wäre dann 1:3. Bei einer Ausführung mit doppelter Anzahl der entsprechenden Abschnitte würde das Drehzahlverhältnis 2:3 betragen. Im Anschluss an die in Fig. 6d dargestellte Stellung des Rotors 9 öffnet sich die rechte Abgas-Ventileinrichtung 3' um den radialen Vorsprung 13 passieren zu lassen und eine Schließung der zweiten Teilventileinrichtung 82 und eine Öffnung der ersten Teilventileinrichtung 81 erfolgen, so dass sich die in Fig. 6a dargestellte Situation in Bezug auf den nächsten radialen Vorsprung 13 ergibt. Die Begriffe "erste Brennkammer 171" und "zweite Brennkammer 172" würden sich dann auf die nächste Brennkammer 17 entgegen der Drehrichtung 21 des Rotors 9 beziehen, so dass die vormals zweite Brennkammer 172 zur ersten Brennkammer 171 in Bezug auf den nächsten radialen Vorsprung 13 (unten links in Fig. 6a dargestellt) wird.

Es ist aber auch denkbar, die erste Teilventileinrichtung 81 und die zweite Teilventileinrichtung 82 gleichartig ohne einen Gas-Durchlassabschnitt 53 zu gestalten. Bei Verzicht auf einen Gas-Durchlassabschnitt 53 in der ersten Teilventileinrichtung 81 kann eine höhere Initialverdichtung in der Kompressionskammer 27 (siehe Fig. 6b) erreicht werden. In einem solchen Fall würde auf die in Fig. 6c dargestellte Stellung des Rotors 9 eine Schließung der zweiten Teilventileinrichtung 82 und eine Öffnung der ersten Teilventileinrichtung 81 erfolgen, so dass sich eine der Fig. 6a entsprechende Situation in Bezug auf den nächsten radialen Vorsprung 13 ergibt.

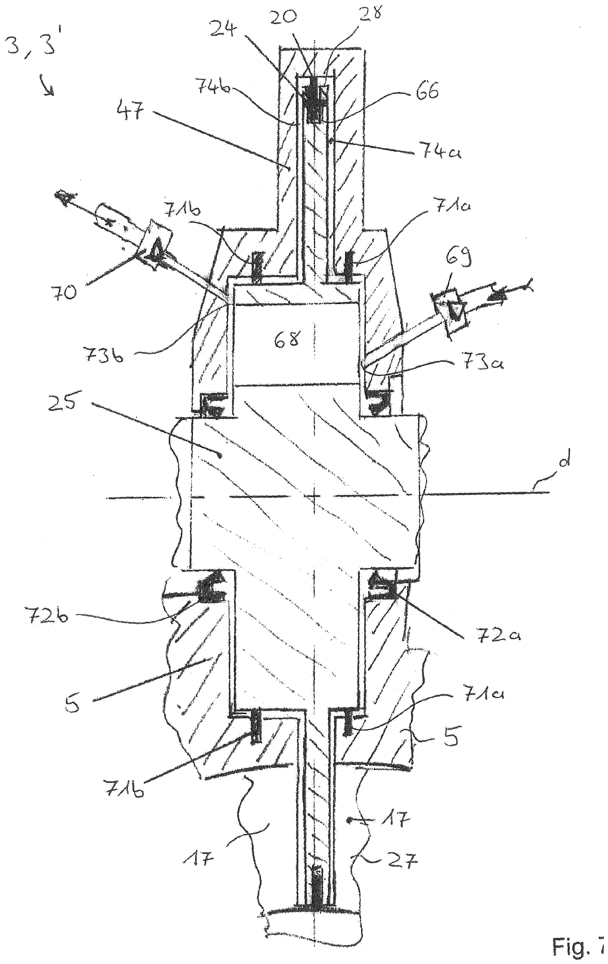

In Fig. 7 ist eine Ausführungsform einer gekühlten Ventileinrichtung 3 dargestellt, durch die Kühlluft zur Kühlung der kreisförmigen Ventilscheibe 25 in axialer Richtung und radial von innen nach außen hindurchgeführt werden kann. Über einen Kühllufteinlassventil 69 kann Kühlluft, insbesondere mit gesteuertem Druck, oder ein anderes Kühlfluid, z.B. Öl, durch die Ventilkappe 47 in den Zwischenraum 73a zwischen der Ventilscheibe 25 und der Ventilkappe 47 an einer radial inneren Position eingeleitet werden. Dieser Zwischenraum 73a ist durch einen Dichtring 71a und einen Wellendichtring 72a abgedichtet und steht mit mindestens einem Kühlkanal 68, der hier als Durchgangsöffnung bzw. -bohrung in der Ventilscheibe 25 ausgebildet ist, in Verbindung. Ein entsprechender Zwischenraum 73b auf der anderen Seite der Ventilscheibe 25 steht mit dem Kühlkanal 68 in Verbindung und ist über einen Dichtring 71b und einem Wellendichtring 72b abgedichtet. Aus diesem Zwischenraum 73b wird an einer radial äußeren Position die erwärmte Kühlluft über ein Kühlluftauslassventil 70 durch die Ventilkappe 47 ausgeleitet. Eine entsprechende Kühlung durch KühlLuft wäre auch für den äußeren Bereich der Ventilscheibe 25 durch Einleitung in den äußeren Zwischenraum 74a und Ableitung aus dem äußeren Zwischenraum 74b, die jeweils mit der Brennkammer 17 in Verbindung stehen, denkbar. Die äußeren Zwischenräume 74a bzw. 74b sind durch die Dichtringe 71a bzw. 71b und ein Abdichtelement 20, das in einer Umfangsrille 66, die in einer Außenfläche 28 der Ventilscheibe 25 ausgebildet ist und über Stifte 24 in der Umfangsrille 66 befestigt ist, abgedichtet. Kühlluft könnte von der Druckseite, also beispielsweise der Seite der Kompressionskammer 27, eingeleitet werden und auf der anderen Seite der Ventileinrichtung 3 bzw. einer Teilventileinrichtung 81, 82, beispielsweise auf die Seite der Zündkammer 29, ausgeleitet werden.

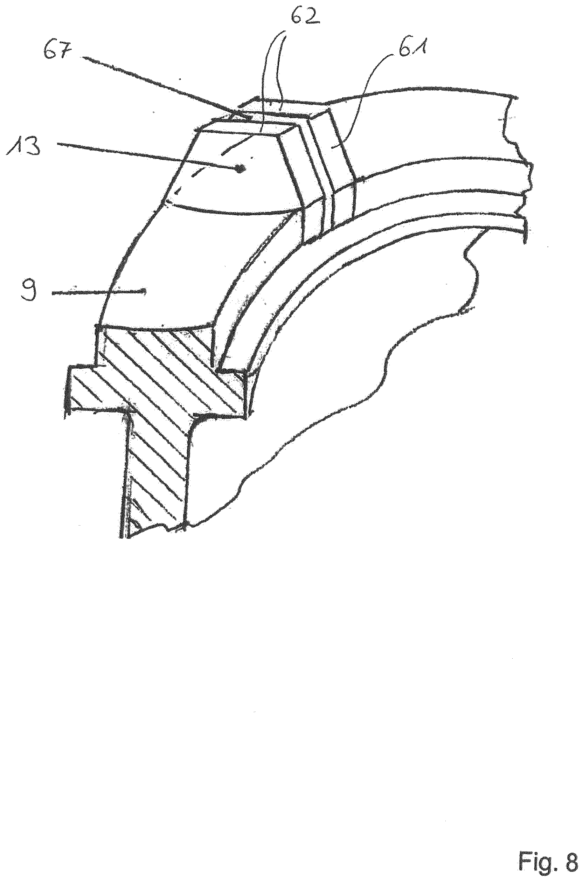

Fig. 8 zeigt einen Ausschnitt einer Ausführungsform eines Rotors 9 mit einem radialen Vorsprung 13, in dem eine Umfangsrille 67 ausgebildet ist. Die Umfangsrille 67 verläuft entlang der Seitenwände 61 und der Kopffläche 62 des radialen Vorsprungs 13. Die Umfangsrille 67 kann insbesondere als Labyrinth-Dichtung, vorzugsweise Luft-Labyrinth-Dichtung, ausgebildet sein. Es ist aber auch denkbar, darin lamellenartige Erweiterungselemente 19 zur Abdichtung des Spalts zwischen den radialen Vorsprüngen 13 zum Gehäuse 5 zu lagern. Auf der Druckseite des radialen Vorsprungs 13, also auf der von der Verzahnungsspitze 59 abgewandten Seite, kann mindestens eine Verwirbelungsmulde in Form einer Vertiefung in der Oberfläche des radialen Vorsprungs 13 vorgesehen sein, um eine bessere Durchmischung des Luft-/Kraftstoffgemischs in der Zündkammer 29 zu erreiche n.

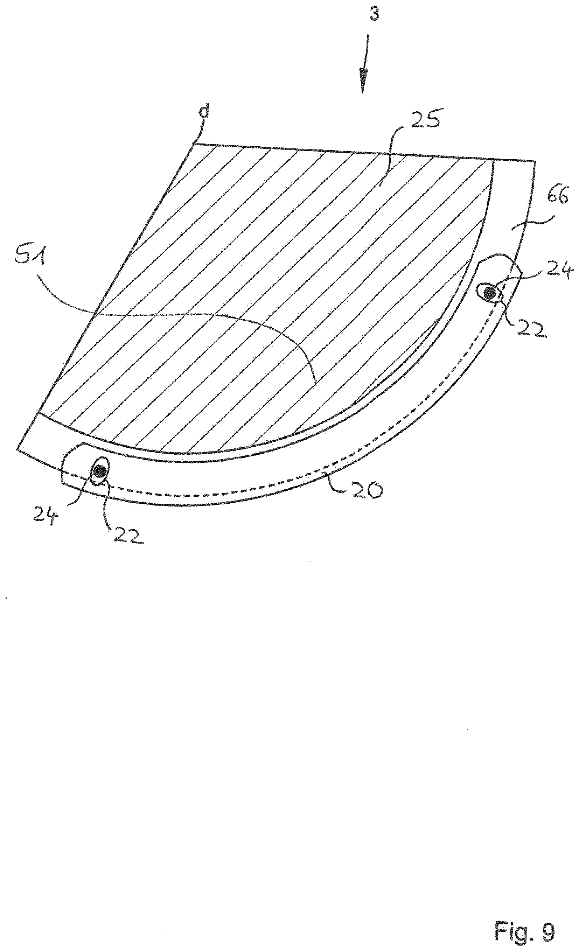

Fig. 9 zeigt eine Darstellung einer Ausführungsform einer erfindungsgemäßen Ventileinrichtung 3 mit einem Abdichtelement 20. In der Ventilscheibe 25 ist eine Umfangsrille 66 ausgebildet, in der ein Abdichtelement 20 radial verschieblich gelagert ist. Die radiale Verschieblichkeit bezieht sich hier auf die radiale Richtung einer Ventilscheibe 25, 26 eines Kreisventils. Das Abdichtelement 20 ist hier als Kolbenringsektor ausgeführt und auf die Länge eines Schließabschnitts 51 der Ventilscheibe 25 abgestimmt. Das Abdichtelement 20 weist auf beiden distalen Seiten Langlöcher 22 auf, in die Stifte 24 eingesteckt sind, die eine radiale Verschiebung des Abdichtelementes 20 entlang der Längsachse der Langlöcher 22 zulassen. Alternativ können auch Rundlöcher vorgesehen sein, deren Durchmesser größer ist als der Durchmesser der Stifte 24. Das radiale Spiel des Abdichtelementes 20 gegenüber der Ventilscheibe 25 beträgt zwischen 0,05 mm und 0,15 mm, vorzugsweise aber 0,10 mm. Die Stifte 24 sind an der Ventilscheibe 25 in der Umfangsrille 66 befestigt. Durch Einfahren, also ein Einschleifen im Betrieb, der Abdichtelemente 20 gegen den Rotor 9 kann erreicht werden, dass Zentrifugalkräfte durch Rotation der Ventileinrichtung 3 von den Stiften 24 aufgenommen werden und keine Zetrifugal-Reibungskräfte auf den Rotor 9 bzw. das Gehäuse 5 einwirken.

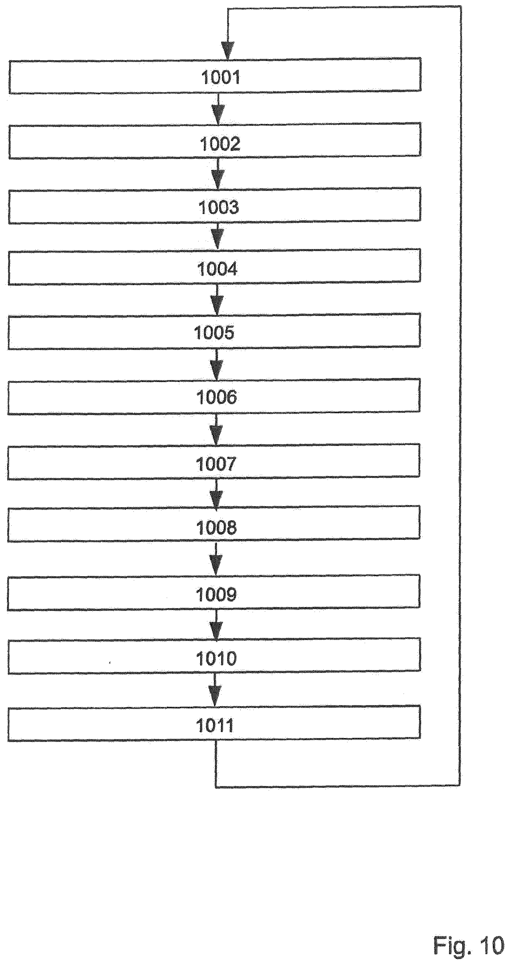

Fig. 10 zeigt ein Blockschema mit den Verfahrensschritten einer Ausführungsform eines erfindungsgemäßen Verfahrens. Nach dem Zuführen 1001, insbesondere Ansaugen von Frischluft in eine erste Brennkammer 171 erfolgt die Abtrennung 1002 einer Kompressionskammer 27 von der ersten Brennkammer 171 durch Schließen der zweiten Teilventileinrichtung 82 der Ventileinrichtung 3. Auf eine Komprimierung 1003 des Gases in der Kompressionskammer 27 durch Drehen des Rotors 9, vorzugsweise bei geschlossener zweiter Teilventileinrichtung 82, erfolgt ein Weiterdrehen 1004 des Rotors 9 an der ersten Teilventileinrichtung 81 der Ventileinrichtung 3 vorbei bzw. durch dessen Rotor-Durchlassabschnitt 49 hindurch, wobei zuvor die erste Teilventileinrichtung 81 geöffnet wurde, falls sie geschlossen war. Durch Schließen der ersten Teilventileinrichtung 81 erfolgt eine Abtrennung 1005 einer Zündkammer 29 von der zweiten Brennkammer 172. Ein Zuführen 1006 von Druckluft aus der Kompressionskammer 27 in die Zündkammer 29 erfolgt hier über die Zündmulde 33, die eine Fluidverbindung zwischen der Kompressionskammer 27 und der Zündkammer 29 ausbildet. Dabei wird das Druckluft durch Weiterdrehen des Rotors 9 aus der Kompressionskammer 27 an dem radialen Vorsprung 13 des Rotors 9 vorbei in die Zündkammer 29 verdrängt bzw. folgt einem Druckgradienten. Nach Aktivieren 1007 des Kraftstoff-Zufuhrsystems 35 erfolgt ein Durchführen 1008 einer Zündung, insbesondere Hauptzündung, durch das Zündsystem 37. Insbesondere erfolgt nach der Zündung ein Öffnen 1009 der zweiten Teilventileinrichtung 82, so dass das verbrennende Gas expandieren kann und den radialen Vorsprung 13 des Rotors 9 in Drehrichtung 21 vorantreibt, Nach Einspritzen 1010 von Druckluft aus einer Kompressionskammer 27 einer zweiten Brennkammer 172 durch düsenartige Öffnungen 57 in der ersten Teilventileinrichtung 81 in die zweite Brennkammer 172, erfolgt kurz danach ein Schließen 1011 der zweiten Teilventileinrichtung 82. Die düsenartigen Öffnungen 57 können in einem Gas-Durchlassabschnitt 53 der Ventilscheibe 25 ausgebildet sein. Das Verfahren wird wiederholt durchgeführt während der Rotor 9 im Betrieb des Verbrennungsmotors 1 rotiert.

Insgesamt offenbart die vorliegende Erfindung einen vorteilhaften Verbrennungsmotor, der einen weitgehend vibrationsfreien Lauf mit stark reduzierten Reibungskräften auch bei hohen Drehzahlen gewährleistet. Die starken Kompressionsfedern für die sehr hohen auftretenden Beschleunigungen von Kolbenteilen, vor allem bei Kleinmotoren und großen Drehzahlen, kann durch die nach Art eines Kreisventils ausgebildete Ventileinrichtung entfallen. Die Ausführung der Ventileinrichtung 3 als Doppelventileinrichtung ermöglicht einen hohen Druck des zu zündenden Luft-/Kraftstoffgemisches in der Zündkammer 29.

### Bezugszeichenliste

- 1: Verbrennungsmotor
- 3: Ventileinrichtung
- 3': Abgas-Ventileinrichtung
- 5: Gehäuse
- 7: Lager
- 9: Rotor
- 11: Vorsprung
- 13: Radialer Vorsprung
- 15: Innenwandung
- 17: Brennkammern
- 19: Lamellenartige Erweiterungselemente
- 20: Abdichtungselement
- 21: Drehrichtung
- 22: Langloch
- 23: Vertiefung
- 24: Stift
- 25: Kreisförmige Ventilscheibe
- 26: tellerförmige Ventilscheibe
- 27: Kompressionskammer
- 28: Außenfläche einer Ventilscheibe
- 29: Zündkammer
- 31: Zufuhrkanal
- 33: Zündmulde
- 35: Kraftstoff-Zufuhrsystem
- 37: Zündsystem
- 39: Abdichtungsringe
- 41: Antriebswelle
- 43: Turbine
- 45: Abluftkanal
- 47: Ventilkappe
- 49: Rotor-Durchlassabschnitt
- 51: Schließabschnitt
- 53: Gas-Durchlassabschnitt
- 55: Dichtung
- 57: Düsenartige Öffnungen
- 59: Verzahnungsspitze
- 61: Seitenwand
- 62: Kopffläche
- 63: Aufnahmemulde
- 65: Gleitschuhe
- 66: Umfangsrille einer Ventilscheibe
- 67: Umfangsrille eines radialen Vorsprungs
- 68: Kühlkanal
- 69: Kühllufteinlassventil
- 70: Kühlluftauslassventil
- 71a: Dichtring
- 71b: Dichtring
- 72a: Wellendichtring
- 72b: Wellendichtring
- 73a: Zwischenraum
- 73b: Zwischenraum
- 74a: äußerer Zwischenraum
- 74b: äußerer Zwischenraum
- 81: erste Teilventileinrichtung
- 82: zweite Teilventileinrichtung
- 171: erste Brennkammer
- 172: zweite Brennkammer
- d: Drehachse Ventileinrichtung
- R: Drehachse Rotor
- N: Oberflächennormale
- W: Doppelventilwinkel
- A: Ansaugsektor
- B: Zünd- und Expansionssektor
- C: Komprimierungssektor
- D: Ausschiebesektor
- h: Höhe
- 1001: Zuführen von Gas in die erste Brennkammer
- 1002: Abtrennung einer Kompressionskammer
- 1003: Komprimierung des Gases
- 1004: Weiterdrehen des Rotors
- 1005: Abtrennung einer Zündkammer
- 1006: Zuführen von Gas aus der Kompressionskammer die Zündkammer
- 1007: Aktivieren des Kraftstoff-Zufuhrsystems
- 1008: Durchführen einer Zündung
- 1009: Öffnen der zweiten Teilventileinrichtung
- 1010: Einspritzen von Druckluft
- 1011: Schließen der zweiten Teilventileinrichtung

## Patentansprüche

1. Verbrennungsmotor (1) mit einem Rotor (9), einem Gehäuse (5) und wenigstens zwei zwischen dem Rotor (9) und dem Gehäuse (5) ausgebildeten Brennkammern (17), wobei das Gehäuse (5) an seiner dem Rotor (9) zugewandten Seite mindestens eine Zündmulde (33) aufweist, in die ein Kraftstoffzufuhr- und Zündsystem (35, 37) mündet,
**dadurch gekennzeichnet, dass**
mindestens eine drehbar im Gehäuse (9) gelagerte Ventileinrichtung (3) vorgesehen ist, die dazu ausgebildet ist, die Brennkammern (17) zumindest zeitweise in eine Zündkammer (29) und eine Kompressionskammer (27) zu unterteilen, wobei die Ventileinrichtung (3) wenigstens einen Rotor-Durchlassabschnitt (49), wenigstens einen Schließabschnitt (51) und wenigstens einen Gas-Durchlassabschnitt (53) aufweist.

2. Verbrennungsmotor (1) mit einem Rotor (9), einem Gehäuse (5) und wenigstens zwei zwischen dem Rotor (9) und dem Gehäuse (5) ausgebildeten Brennkammern (17), wobei das Gehäuse (5) an seiner dem Rotor (9) zugewandten Seite mindestens eine Zündmulde (33) aufweist, in die ein Kraftstoffzufuhr- und Zündsystem (35, 37) mündet,
**dadurch gekennzeichnet, dass**
mindestens eine drehbar im Gehäuse (9) gelagerte Ventileinrichtung (3) vorgesehen ist, die dazu ausgebildet ist, die Brennkammern (17) zumindest zeitweise in eine Zündkammer (29) und eine Kompressionskammer (27) zu unterteilen,
wobei die Ventileinrichtung (3) zeitweise gleichzeitig eine Kompressionskammer (27) von einer ersten Brennkammer (171) und eine Zündkammer (29) von einer zweiten Brennkammer (172) abtrennt und zwischen der Zündkammer (29) und der Kompressionskammer (27) währenddessen eine Fluidverbindung besteht.

3. Verbrennungsmotor nach Anspruch 2,
**dadurch gekennzeichnet, dass**
die Ventileinrichtung (3) mindestens zwei Teilventileinrichtungen (81, 82) mit je wenigstens einem Rotor-Durchlassabschnitt (49) und wenigstens einem Schließabschnitt (51) umfasst.

4. Verbrennungsmotor nach Anspruch 2 oder 3,
**dadurch gekennzeichnet, dass**
die Ventileinrichtung (3), insbesondere eine erste Teilventileinrichtung (81), wenigstens einen Rotor-Durchlassabschnitt (49), wenigstens einen Schließabschnitt (51) und wenigstens einen Gas-Durchlassabschnitt (53) aufweist.

5. Verbrennungsmotor nach Anspruch 1 oder 4,
**dadurch gekennzeichnet, dass**
der Rotor-Durchlassabschnitt (49), der wenigstens eine Schließabschnitt (51) und der wenigstens eine Gas-Durchlassabschnitt (53) rotierbar gelagert sind.

6. Verbrennungsmotor nach einem der vorhergehenden Ansprüche,
**dadurch gekennzeichnet, dass**
die Ventileinrichtung (3), insbesondere eine Teilventileinrichtung (81, 82), als Kreisventil ausgebildet ist.

7. Verbrennungsmotor nach einem der vorhergehenden Ansprüche,
**dadurch gekennzeichnet, dass**
der Rotor (9) wenigstens zwei radiale Vorsprünge (13) zur Bildung der Brennkammern (17) aufweist.

8. Verbrennungsmotor nach einem der vorhergehenden Ansprüche, insbesondere Anspruch 7,
**dadurch gekennzeichnet, dass**
die radialen Vorsprünge (13) jeweils mit einem lamellenartigen Erweiterungselement (19) in einer radialen und/oder axialer Richtung verlängert sind, die bei einer Rotation des Rotors (9) an der Innenwandung (15) des Gehäuses (9) entlang gleiten.

9. Verbrennungsmotor nach Anspruch 8,
**dadurch gekennzeichnet, dass**
die lamellenartigen Erweiterungselemente (19) jeweils mit mindestens einem Gleitschuh (65) versehen sind.

10. Verbrennungsmotor nach einem der Ansprüche 7 bis 9,
**dadurch gekennzeichnet, dass**
sich die Ventileinrichtung (3), insbesondere eine Teilventileinrichtung (81, 82), und die radialen Vorsprünge (13) des Rotors (9) zumindest bereichsweise in der radialen Richtung überlappen.

11. Verbrennungsmotor nach einem der vorhergehenden Ansprüche,
insbesondere einem der Ansprüche 1 oder 4 bis 9,
**dadurch gekennzeichnet, dass**
der Rotor-Durchlassabschnitt (49), der Schließabschnitt (51) und der Gas-Durchlassabschnitt (53) vorzugsweise in dieser Reihenfolge hintereinander angeordnet sind.

12. Verbrennungsmotor nach einem der vorhergehenden Ansprüche,
**dadurch gekennzeichnet, dass**
die Ventileinrichtung (3), insbesondere eine Teilventileinrichtung (81, 82), scheibenförmig, topfförmig oder hohlkegelförmig ausgebildet ist.

13. Verbrennungsmotor nach einem der vorhergehenden Ansprüche,
**dadurch gekennzeichnet, dass**
die Drehachse (d) der Ventileinrichtung (3) in einem beliebigen Winkel und insbesondere senkrecht zu der Drehachse (R) des Rotors (9) angeordnet ist.

14. Verbrennungsmotor nach einem der vorhergehenden Ansprüche,
**dadurch gekennzeichnet, dass**
die Drehgeschwindigkeit der Ventileinrichtung (3), insbesondere einer Teilventileinrichtung (81, 82), elektrisch oder mechanisch in Abhängigkeit von der Drehzahl des Rotors (9) einstellbar ist.

15. Verbrennungsmotor nach einem der vorhergehenden Ansprüche,
**dadurch gekennzeichnet, dass**
die Ventileinrichtung (3), insbesondere eine Teilventileinrichtung (81, 82), mit dem Rotor (9) bzw. mit einer Antriebswelle, insbesondere über ein Getriebe, mechanisch verbunden ist.

16. Verbrennungsmotor nach einem der vorhergehenden Ansprüche,
**dadurch gekennzeichnet, dass**
das Gehäuse (5) an seiner dem Rotor (9) zugewandten Innenwandung (15) wenigstens eine Vertiefung (23) zur Aufnahme der lamellenartigen Erweiterungselemente (19) aufweist.

17. Verbrennungsmotor nach einem der vorhergehenden Ansprüche, insbesondere einem der Ansprüche 1 oder 4 bis 16,
**dadurch gekennzeichnet, dass**
der Gas-Durchlassabschnitt (49) mehrere düsenartige Öffnungen (57) zur Herstellung einer Fluidverbindung zwischen der Zündkammer (29) und der Kompressionskammer (27) aufweist.

18. Verbrennungsmotor nach einem der vorhergehenden Ansprüche,
**dadurch gekennzeichnet, dass**
die Ventileinrichtung (3), insbesondere eine Teilventileinrichtung (81, 82), ein- oder mehrteilig ausgebildet ist und insbesondere mindestens zwei Teile aufweist, die in entgegengesetzten Richtungen drehbar gelagert sind und die bei einer synchronen Rotation den Rotor-Durchlassabschnitt (49), den Schließabschnitt (51) und den Gas-Durchlassabschnitt (53) bilden.

19. Verbrennungsmotor nach einem der vorhergehenden Ansprüche,
**dadurch gekennzeichnet, dass**
die Ventileinrichtung (3), insbesondere eine erste Teilventileinrichtung (81), in der Drehrichtung (21) des Rotors (9) gesehen, vor der Zündmulde (33) angeordnet ist.

20. Verbrennungsmotor nach einem der vorhergehenden Ansprüche,
**dadurch gekennzeichnet, dass**
mindestens ein Zufuhrkanal (31) in dem Gehäuse (5) angeordnet ist, der in der Drehrichtung (21) des Rotors (9) gesehen, vor der Ventileinrichtung (3) angeordnet ist und zur Zufuhr von Gas oder eines Verbrennungsgemisches, insbesondere eines Brennstoff-Luftgemisches oder Luft, in die Brennkammer (17) dient.

21. Verbrennungsmotor nach einem der vorhergehenden Ansprüche,
**dadurch gekennzeichnet, dass**
wenigstens eine Abgas-Ventileinrichtung (3') vorgesehen ist, die wenigstens einen rotierbaren Rotor-Durchlassabschnitt und wenigstens einen rotierbaren Schließabschnitt aufweist.

22. Verbrennungsmotor nach einem der vorhergehenden Ansprüche,
**dadurch gekennzeichnet, dass**
die Abgas-Ventileinrichtung (3') in der Drehrichtung (21) des Rotors (9) gesehen, nach der Zündmulde (33) angeordnet ist.

23. Verbrennungsmotor nach einem der vorhergehenden Ansprüche,
**dadurch gekennzeichne**t, dass
die Abgas-Ventileinrichtung (3') mit mindestens einem in dem Gehäuse (5) angeordneten Abluftkanal (45) zum Abführen des verbrannten Gases zusammenwirkt.

24. Verbrennungsmotor nach Anspruch 19,
**dadurch gekennzeichnet, dass**
der Abluftkanal (45) mit dem Zufuhrkanal (31) in Fluidverbindung steht, sodass zumindest ein Teil des verbrannten Gases der Brennkammer (17) zugeführt werden kann.

25. Verbrennungsmotor nach einem der vorhergehenden Ansprüche,
**dadurch gekennzeichnet, dass**
die Zündkammer (33) durch den Rotor (9), einen radialen Vorsprung (13) des Rotors (9), die Ventileinrichtung (3), insbesondere eine erste Teilventileinrichtung (81), die Zündmulde (33) und die Innenwandung (15) des Gehäuses (5) begrenzt wird.

26. Verbrennungsmotor nach einem der vorhergehenden Ansprüche,
**dadurch gekennzeichnet, dass**
der Rotor (9) direkt oder indirekt, insbesondere über ein Getriebe, mit einer Turbine (43) gekoppelt ist, die mit Gas, insbesondere mit Abgas, aus dem Abluftkanal (45) gespeist wird.

27. Verbrennungsmotor nach einem der vorhergehenden Ansprüche,
**dadurch gekennzeichnet, dass**
die Ventileinrichtung (3) als Doppelventileinrichtung mit einer ersten Teilventileinrichtung (81) und einer zweiten Teilventileinrichtung (82) ausgeführt ist, die insbesondere starr miteinander verbunden oder als getrennte Teilventileinrichtungen (81, 82) ausgeführt sind.

28. Verbrennungsmotor nach einem der vorhergehenden Ansprüche,
**dadurch gekennzeichnet, dass**
die erste Teilventileinrichtung (81) und/oder die zweite Teilventileinrichtung (82) als Kreisventile, insbesondere mit einer gemeinsamen Drehachse (d) oder getrennten Drehachsen (d), vorzugsweise mit getrennten Wellen, ausgeführt sind/ist.

29. Verbrennungsmotor nach einem der vorhergehenden Ansprüche,
**dadurch gekennzeichnet, dass**
die erste Teilventileinrichtung (81) und die zweite Teilventileinrichtung (82) um einen Doppelventilwinkel (W) zwischen 20 und 35 Grad, zueinander in Drehrichtung (21) des Rotors (9) versetzt angeordnet sind.

30. Verbrennungsmotor nach einem der vorhergehenden Ansprüche,
**dadurch gekennzeichnet, dass**
die zweite Teilventileinrichtung (82) eine tellerförmige Ventilscheibe (26) aufweist, wobei eine Oberflächennormale (N) der Ventilscheibe (26) vorzugsweise parallel zur Drehrichtung (21) des Rotors (9) verläuft.

31. Verbrennungsmotor nach einem der vorhergehenden Ansprüche,
**dadurch gekennzeichnet, dass**
die Zündmulde (33) zwischen einer ersten Teilventileinrichtung (81) und einer zweiten Teilventileinrichtung (82) angeordnet ist.

32. Verbrennungsmotor nach einem der vorhergehenden Ansprüche,
**dadurch gekennzeichnet, dass**
das Drehzahlverhältnis des Rotors (9) zu der Ventileinrichtung (3), insbesondere der ersten Teilventileinrichtung (81) und/oder der zweiten Teilventileinrichtung (82), 1:3 oder 2:3 beträgt.

33. Verbrennungsmotor nach einem der vorhergehenden Ansprüche,
**dadurch gekennzeichnet, dass**
zumindest abschnittsweise entlang einer Außenfläche (28) einer Ventilscheibe (25, 26) der Ventileinrichtung (3) mindestens ein Abdichtungselement (20) vorgesehen ist, das vorzugsweise in Umfangsrillen (66) geführt ist und vorzugsweise jeweils auf die Länge eines Schließabschnitts (51) abgestimmt ist.

34. Verbrennungsmotor nach Anspruch 33,
**dadurch gekennzeichnet, dass**
die Abdichtungselemente (20) in radialer Richtung verschieblich, vorzugsweise mit radialem Spiel zwischen 0,05 mm und 0,15 mm, an der Ventilscheibe (25, 26) befestigt sind.

35. Verbrennungsmotor nach Anspruch 33 oder 34,
**dadurch gekennzeichnet, dass**
die Abdichtungselemente (20) sich in radialer Richtung erstreckende Langlöcher (22) aufweisen und über darin geführte Stifte (24) an einer Ventilscheibe (25, 26) radial verschieblich befestigt sind.

36. Verbrennungsmotor nach einem der Ansprüche 1 bis 32,
**dadurch gekennzeichnet, dass**
zumindest abschnittsweise Labyrinthdichtungen, vorzugsweise Luft-Labyrinthdichtungen, in einer Außenfläche (28) einer Ventilscheibe (25, 26) der Ventileinrichtung (3) und/oder in einer Außen- und/oder Seitenfläche der radialen Vorsprünge (13) vorgesehen sind.

37. Verbrennungsmotor nach einem der vorhergehenden Ansprüche,
**dadurch gekennzeichnet, dass**
Druckluft zur Kühlung durch die Ventileinrichtung (3) geführt wird, wobei Kühlluft vorzugsweise durch einen Abschnitt der Ventileinrichtung (3) radial nach außen strömt.

38. Verbrennungsmotor nach einem der vorhergehenden Ansprüche,
**dadurch gekennzeichnet, dass**
die Drehachse (d) einer Abgas-Ventileinrichtung (3') parallel zur Drehachse (R) des Rotors (9) verläuft.

39. Verbrennungsmotor nach einem der vorhergehenden Ansprüche,
**dadurch gekennzeichnet, dass**
ein Verdichter, vorzugsweise mit Radialverdichterschaufeln, mit dem Rotor gekoppelt ist, um vorverdichtete Frischluft als Kühluft und/oder mit einem bestimmten Ladeluftdruck in einem Zufuhrkanal (31) bereitzustellen.

40. Verfahren zum Betreiben eines Verbrennungsmotors nach einem der Ansprüche 1 oder 4 bis 39, aufweisend die folgenden Schritte:
- Zuführen von Gas oder einem Verbrennungsgemisch, insbesondere einem Brennstoff-Luftgemisch oder Luft, in die Brennkammer (17);
- Durchführen des Rotors (9) durch den Rotor-Durchlassabschnitt (49) zur Bildung der Zündkammer (33) und zum Zuführen von Gas in die Zündkammer;
- Rotieren der Ventileinrichtung (3) und Verschließen der Zündkammer (33) mit dem Schließabschnitt (51);
- Aktivieren des Kraftstoffzufuhr- und Zündsystems (35, 37) und Durchführen der Zündung in der Zündkammer (33);
- Rotieren der Ventileinrichtung (3) und Zuführen eines komprimierten Gases oder Verbrennungsgemisches von der Kompressionskammer (27) durch den Gas-Durchlassabschnitt (53) in die Zündkammer (29).

41. Verfahren zum Betreiben eines Verbrennungsmotors nach einem der Ansprüche 2 bis 39, aufweisend die folgenden Schritte:
- Zuführen (1001), insbesondere Ansaugen, von Gas oder einem Verbrennungsgemisch, insbesondere einem Brennstoff-Luftgemisch oder Luft, in eine erste Brennkammer (171);
- Abtrennung (1002) einer Kompressionskammer (27) von der ersten Brennkammer (171) durch Schließen der Ventileinrichtung (3), insbesondere einer zweiten Teilventileinrichtung (82) der Ventileinrichtung (3),
- Komprimierung (1003) des Gases oder des Verbrennungsgemisches in der Kompressionskammer (27) durch Drehen des Rotors (9),
- Weiterdrehen (1004) des Rotors (9) an einer ersten Teilventileinrichtung (81) der Ventileinrichtung (3) vorbei bzw, durch diese hindurch, insbesondere nach vorherigem Öffnen der ersten Teilventileinrichtung (81),
- Abtrennung (1005) einer Zündkammer (29) von einer zweiten Brennkammer (172) durch Schließen der ersten Teilventileinrichtung (81),
- Zuführen (1006) von Gas oder Verbrennungsgemisch aus der Kompressionskammer (27) in die Zündkammer (29) über eine Fluidverbindung zwischen der Kompressionskammer (27) und der Zündkammer (29), insbesondere durch Verdrängen des Gases oder des Verbrennungsgemisches durch Weiterdrehen des Rotors (9);
- Aktivieren (1007) des Kraftstoffzufuhr- und Zündsystems (35, 37) und Durchführen (1008) der Zündung in der Zündkammer (33).

42. Verfahren nach Anspruch 40 oder 41,
**gekennzeichnet durch**
mindestens eine erneute Durchführung einer Zündung nach der Zufuhr des komprimierten Gases oder Verbrennungsgemisches in die Zündkammer (29).

43. Verfahren nach einem der Ansprüche 40 bis 42,
**dadurch gekennzeichnet, dass**
zumindest ein Teil des in der Kompressionskammer (27) komprimierten Gases oder Verbrennungsgemisches in einer Speichereinrichtung zwischengespeichert wird.

44. Verfahren nach einem der Ansprüche 40 bis 43,
**dadurch gekennzeichnet, dass**
das zwischengespeicherte Gas oder Verbrennungsgemisch der Zündkammer (33) zugeführt wird und/oder zum Starten des Verbrennungsmotors verwendet wird.

45. Verfahren nach Anspruch 41,
**gekennzeichnet durch**
folgende Schritte nach Durchführen der ersten Zündung in der Zündkammer (33):
- Öffnen (1009) der zweiten Teilventileinrichtung (82);
- Einspritzen (1010) von Druckluft aus einer Kompressionskammer (27) **durch** düsenartige Öffnungen (57) in der ersten Teilventileinrichtung (81) in die zweite Brennkammer (172),
- Schließen (1011) der zweiten Teilventileinrichtung (82).

## Claims

1. An internal combustion engine (1) having a rotor (9), a housing (5) and at least two combustion chambers (17) formed between the rotor (9) and the housing (5), wherein the housing (5) has at least one ignition recess (33) on its side facing the rotor (9), into which recess a fuel feed and ignition system (35, 37) opens,
**characterized in that**
at least one valve device (3) mounted rotatably in the housing (9) is provided, said valve device being designed to divide the combustion chambers (17) at least temporarily into an ignition chamber (29) and a compression chamber (27), wherein the valve device (3) has at least one rotor passage section (49), at least one closing section (51) and at least one gas passage section (53).

2. An internal combustion engine (1) having a rotor (9), a housing (5) and at least two combustion chambers (17) formed between the rotor (9) and the housing (5), wherein the housing (5) has at least one ignition recess (33) on its side facing the rotor (9), into which recess a fuel feed and ignition system (35, 37) opens,
**characterized in that**
at least one valve device (3) mounted rotatably in the housing (9) is provided, said valve device being designed to divide the combustion chambers (17) at least temporarily into an ignition chamber (29) and a compression chamber (27),
wherein the valve device (3) temporarily and simultaneously divides a compression chamber (27) from a first combustion chamber (171) and an ignition chamber (29) from a second combustion chamber (172), and, during this process, there is a fluid connection between the ignition chamber (29) and the compression chamber (27).

3. The internal combustion engine as claimed in claim 2,
**characterized in that**
the valve device (3) comprises at least two partial valve devices (81, 82), each having at least one rotor passage section (49) and at least one closing section (51).

4. The internal combustion engine as claimed in claim 2 or 3,
**characterized in that**
the valve device (3), in particular a first partial valve device (81), has at least one rotor passage section (49), at least one closing section (51) and at least one gas passage section (53).

5. The internal combustion engine as claimed in claim 1 or 4,
**characterized in that**
the rotor passage section (49), the at least one closing section (51) and the at least one gas passage section (53) are rotatably mounted.

6. The internal combustion engine as claimed in one of the preceding claims,
**characterized in that**
the valve device (3), in particular a partial valve device (81, 82), is designed as a circular valve.

7. The internal combustion engine as claimed in one of the preceding claims,
**characterized in that**
the rotor (9) has at least two radial projections (13) to form the combustion chambers (17).

8. The internal combustion engine as claimed in one of the preceding claims, in particular claim 7,
**characterized in that**
the radial projections (13) are each extended in a radial and/or axial direction by a lamellar extension element (19), said elements sliding along the inner wall (15) of the housing (9) during rotation of the rotor (9).

9. The internal combustion engine as claimed in claim 8,
**characterized in that**
the lamellar extension elements (19) are each provided with at least one sliding shoe (65).

10. The internal combustion engine as claimed in one of claims 7 to 9,
**characterized in that**
the valve device (3), in particular a partial valve device (81, 82), and the radial projections (13) of the rotor (9) at least partially overlap in the radial direction.

11. The internal combustion engine as claimed in one of the preceding claims, in particular one of claims 1 or 4 to 9,
**characterized in that**
the rotor passage section (49), the closing section (51) and the gas passage section (53) are preferably arranged in series in this sequence.

12. The internal combustion engine as claimed in one of the preceding claims,
**characterized in that**
the valve device (3), in particular a partial valve device (81, 82), is of disk-shaped, cup-shaped or hollow-cone-shaped design.

13. The internal combustion engine as claimed in one of the preceding claims,
**characterized in that**
the axis of rotation (d) of the valve device (3) is arranged at any desired angle and, in particular, perpendicularly to the axis of rotation (R) of the rotor (9).

14. The internal combustion engine as claimed in one of the preceding claims,
**characterized in that**
the speed of rotation of the valve device (3), in particular of a partial valve device (81, 82), can be adjusted electrically or mechanically in accordance with the speed of the rotor (9).

15. The internal combustion engine as claimed in one of the preceding claims,
**characterized in that**
the valve device (3), in particular a partial valve device (81, 82), is connected mechanically to the rotor (9) or to a drive shaft, in particular via a transmission.

16. The internal combustion engine as claimed in one of the preceding claims,
**characterized in that**
the housing (5) has at least one depression (23) to accommodate the lamellar extension elements (19) on its inner wall (15) facing the rotor (9).

17. The internal combustion engine as claimed in one of the preceding claims, in particular one of claims 1 or 4 to 16,
**characterized in that**
the gas passage section (49) has a plurality of nozzle-type openings (57) to produce a fluid connection between the ignition chamber (29) and the compression chamber (27).

18. The internal combustion engine as claimed in one of the preceding claims,
**characterized in that**
the valve device (3), in particular a partial valve device (81, 82), is of single- or multi-part design and, in particular, has at least two parts, which are mounted so as to be rotatable in opposite directions and which form the rotor passage section (49), the closing section (51) and the gas passage section (53) in the case of a synchronous rotation.

19. The internal combustion engine as claimed in one of the preceding claims,
**characterized in that**
the valve device (3), in particular a first partial valve device (81), is arranged ahead of the ignition recess (33), as seen in the direction of rotation (21) of the rotor (9).

20. The internal combustion engine as claimed in one of the preceding claims,
**characterized in that**
at least one feed duct (31) is arranged in the housing (5), said duct being arranged ahead of the valve device (3), as seen in the direction of rotation (21) of the rotor (9), and being used to feed gas or a combustion mixture, in particular a fuel/air mixture or air, into the combustion chamber (17).

21. The internal combustion engine as claimed in one of the preceding claims,
**characterized in that**
at least one exhaust gas valve device (3') is provided, which has at least one rotatable rotor passage section and at least one rotatable closing section.

22. The internal combustion engine as claimed in one of the preceding claims,
**characterized in that**
the exhaust gas valve device (3') is arranged after the ignition recess (33), as seen in the direction of rotation (21) of the rotor (9).

23. The internal combustion engine as claimed in one of the preceding claims,
**characterized in that**
the exhaust gas valve device (3') interacts with at least one exhaust air duct (45) arranged in the housing (5) to discharge the burnt gas.

24. The internal combustion engine as claimed in claim 19,
**characterized in that**
the exhaust air duct (45) is in fluid connection with the feed duct (31), thus allowing at least some of the burnt gas to be fed to the combustion chamber (17).

25. The internal combustion engine as claimed in one of the preceding claims,
**characterized in that**
the ignition chamber (33) is bounded by the rotor (9), a radial projection (13) of the rotor (9), the valve device (3), in particular a first partial valve device (81), the ignition recess (33) and the inner wall (15) of the housing (5).

26. The internal combustion engine as claimed in one of the preceding claims,
**characterized in that**
the rotor (9) is coupled directly or indirectly, in particular via a transmission, to a turbine (43), which is supplied with gas, in particular with exhaust gas, from the exhaust air duct (45).

27. The internal combustion engine as claimed in one of the preceding claims,
**characterized in that**
the valve device (3) is embodied as a double valve device having a first partial valve device (81) and a second partial valve device (82), which are connected to one another, in particular rigidly connected to one another, or are embodied as separate partial valve devices (81, 82).

28. The internal combustion engine as claimed in one of the preceding claims,
**characterized in that**
the first partial valve device (81) and/or the second partial valve device (82) are/is embodied as circular valves, in particular with a common axis of rotation (d) or separate axes of rotation (d), preferably with separate shafts.

29. The internal combustion engine as claimed in one of the preceding claims,
**characterized in that**
the first partial valve device (81) and the second partial valve device (82) are offset relative to one another in the direction of rotation (21) of the rotor (9) by a double valve angle (W) of between 20 and 35 degrees.

30. The internal combustion engine as claimed in one of the preceding claims,
**characterized in that**
the second partial valve device (82) has a plate-shaped valve disk (26), wherein a surface normal (N) of the valve disk (26) is preferably parallel to the direction of rotation (21) of the rotor (9) .

31. The internal combustion engine as claimed in one of the preceding claims,
**characterized in that**
the ignition recess (33) is arranged between a first partial valve device (81) and a second partial valve device (82).

32. The internal combustion engine as claimed in one of the preceding claims,
**characterized in that**
the ratio of the speed of the rotor (9) to that of the valve device (3), in particular of the first partial valve device (81) and/or of the second partial valve device (82), is 1:3 or 2:3.

33. The internal combustion engine as claimed in one of the preceding claims,
**characterized in that**
at least one sealing element (20) is provided at least in sections along an outer surface (28) of a valve disk (25, 26) of the valve device (3), said sealing element preferably being guided in circumferential grooves (66) and preferably being matched in each case to the length of a closing section (51).

34. The internal combustion engine as claimed in claim 33,
**characterized in that**
the sealing elements (20) are secured on the valve disk (25, 26) in such a way as to be movable in the radial direction, preferably with a radial play of between 0.05 mm and 0.15 mm.

35. The internal combustion engine as claimed in claim 33 or 34,
**characterized in that**
the sealing elements (20) have slotted holes (22) extending in a radial direction and are secured on a valve disk (25, 26) in a radially movable manner by means of pins (24) guided in said holes.

36. The internal combustion engine as claimed in one of claims 1 to 32,
**characterized in that**
labyrinth seals, preferably air labyrinth seals, are provided in at least in sections of an outer surface (28) of a valve disk (25, 26) of the valve device (3) and/or an outer and/or lateral surface of the radial projections (13).

37. The internal combustion engine as claimed in one of the preceding claims,
**characterized in that**
compressed air for cooling is passed through the valve device (3), wherein cooling air preferably flows radially outward through one section of the valve device (3).

38. The internal combustion engine as claimed in one of the preceding claims,
**characterized in that**
the axis of rotation (d) of an exhaust gas valve device (3') is parallel to the axis of rotation (R) of the rotor (9).

39. The internal combustion engine as claimed in one of the preceding claims,
**characterized in that**
a compressor, preferably one having radial compressor blades, is coupled to the rotor in order to provide pre-compressed fresh air as cooling air and/or at a certain boost air pressure in a feed duct (31).

40. A method for operating an internal combustion engine as claimed in one of claims 1 or 4 to 39, having the following steps:
- feeding gas or a combustion mixture, in particular a fuel/air mixture or air, into the combustion chamber (17);
- passing the rotor (9) through the rotor passage section (49) to form the ignition chamber (33) and feed gas into the ignition chamber;
- rotating the valve device (3) and closing the ignition chamber (33) with the closing section (51) ;
- activating the fuel feed and ignition system (35, 37) and carrying out ignition in the ignition chamber (33);
- rotating the valve device (3) and feeding a compressed gas or combustion mixture from the compression chamber (27), through the gas passage section (53), into the ignition chamber (29).

41. A method for operating an internal combustion engine as claimed in one of claims 2 to 39, having the following steps:
- feeding (1001), in particular drawing, gas or a combustion mixture, in particular a fuel/air mixture or air, into a first combustion chamber (171);
- dividing (1002) a compression chamber (27) from the first combustion chamber (171) by closing the valve device (3), in particular a second partial valve device (82) of the valve device (3);
- compressing (1003) the gas or the combustion mixture in the compression chamber (27) by rotating the rotor (9);
- rotating (1004) the rotor (9) further past a first partial valve device (81) of the valve device (3) or through the latter, in particular after previously opening the first partial valve device (81);
- dividing (1005) an ignition chamber (29) from a second combustion chamber (172) by closing the first partial valve device (81);
- feeding (1006) gas or combustion mixture from the compression chamber (27) into the ignition chamber (29) via a fluid connection between the compression chamber (27) and the ignition chamber (29), in particular by displacing the gas or the combustion mixture by rotating the rotor (9) further;
- activating (1007) the fuel feed and ignition system (35, 37) and carrying out (1008) ignition in the ignition chamber (33).

42. The method as claimed in claim 40 or 41,
**characterized by**
at least one repeated performance of an ignition after the feeding of the compressed gas or combustion mixture into the ignition chamber (29).

43. The method as claimed in one of claims 40 to 42,
**characterized in that**
at least part of the gas or combustion mixture compressed in the compression chamber (27) is intermediately stored in a storage device.

44. The method as claimed in one of claims 40 to 43,
**characterized in that**
the intermediately stored gas or combustion mixture is fed to the ignition chamber (33) and/or used to start the internal combustion engine.

45. The method as claimed in claim 41,
**characterized by**
the following steps after the performance of the first ignition in the ignition chamber (33):
- opening (1009) the second partial valve device (82) ;
- injecting (1010) compressed air from a compression chamber (27) into the second combustion chamber (172) through nozzle-type openings (57) in the first partial valve device (81);
- closing (1011) the second partial valve device (82) .

## Revendications

1. Moteur à combustion interne (1) pourvu d'un rotor (9), d'un carter (5) et d'au moins deux chambres de combustion (17) conçues entre le rotor (9) et le carter (5), sur son côté faisant face au rotor (9), le carter (5) comportant au moins un puits d'allumage (33) dans lequel débouche un système d'alimentation en carburant et d'allumage (35, 37), **caractérisé en ce qu'**il est prévu au moins un système de soupape (3) logé de manière rotative dans le carter (9), qui est conçu pour diviser au moins temporairement les chambres de combustion (17) en une chambre d'allumage (29) et une chambre de compression (27), le système de soupape (3) comportant au moins une section de passage du rotor (49), au moins une section de fermeture (51) et au moins une section de passage du gaz (53).

2. Moteur à combustion interne (1) pourvu d'un rotor (9), d'un carter (5) et d'au moins deux chambres de combustion (17) conçues entre le rotor (9) et le carter (5), sur son côté faisant face au rotor (9), le carter (5) comportant au moins un puits d'allumage (33) dans lequel débouche un système d'alimentation en carburant et d'allumage (35, 37), **caractérisé en ce qu'**il est prévu au moins un système de soupape (3) logé de manière rotative dans le carter (9) qui est conçu pour diviser au moins temporairement les chambres de combustion (17) en une chambre d'allumage (29) et une chambre de compression (27), le système de soupape (3) séparant simultanément de manière temporaire une chambre de compression (27) d'une première chambre de combustion (171) et une chambre d'allumage (29) d'une deuxième chambre de combustion (172) et entre la chambre d'allumage (49) et la chambre de compression (27) étant établie pendant ce temps une liaison fluidique.

3. Moteur à combustion interne selon la revendication 2, **caractérisé en ce que** le système de soupape (3) comprend au moins deux systèmes partiels de soupape (81 ; 82) comportant chacun au moins une section de passage du rotor (49) et au moins une section de fermeture (51).

4. Moteur à combustion interne selon la revendication 2 ou 3, **caractérisé en ce que** le système de soupape (3), notamment un premier système partiel de soupape (81), comporte au moins une section de passage du rotor (49), au moins une section de fermeture (51) et au moins une section de passage du gaz (53).

5. Moteur à combustion interne selon la revendication 1 ou 4, **caractérisé en ce que** la section de passage du rotor (49), l'au moins une section de fermeture (51) et l'au moins une section de passage du gaz (53) sont logées de manière rotative.

6. Moteur à combustion interne selon l'une quelconque des revendications précédentes, **caractérisé en ce que** le système de soupape (3), notamment un système partiel de soupape (81, 82) est conçu sous la forme d'une soupape de circuit.

7. Moteur à combustion interne selon l'une quelconque des revendications précédentes, **caractérisé en ce que** le rotor (9) comporte au moins deux saillies (13) radiales pour créer les chambres de combustion (17).

8. Moteur à combustion interne selon l'une quelconque des revendications précédentes, notamment la revendication 7, **caractérisé en ce que** les saillies (13) radiales sont prolongées chacune dans une direction radiale et/ou axiale par un élément d'extension (19) en forme de lamelle, qui lors d'une rotation du rotor (9) glissent le long de la paroi intérieure (15) du carter (9).

9. Moteur à combustion interne selon la revendication 8, **caractérisé en ce que** les éléments d'extension (19) en forme de lamelles sont munis chacun d'au moins un patin coulissant (65).

10. Moteur à combustion interne selon l'une quelconque des revendications 7 à 9, **caractérisé en ce que** le système de soupape (3), notamment un système partiel de soupape (81, 82) et les saillies (13) radiales du rotor (9) se chevauchent au moins par endroits dans la direction radiale.

11. Moteur à combustion interne selon l'une quelconque des revendications précédentes, notamment l'une quelconque des revendications 1 ou 4 à 9, **caractérisé en ce que** la section de passage du rotor (49), la section de fermeture (51) et la section de passage du gaz (53) sont placées de préférence l'une derrière l'autre selon cette séquence.

12. Moteur à combustion interne selon l'une quelconque des revendications précédentes, **caractérisé en ce que** le système de soupape (3), notamment un système partiel de soupape (81, 82) est conçu en forme de disque, en forme de pot ou en forme de cône creux.

13. Moteur à combustion interne selon l'une quelconque des revendications précédentes, **caractérisé en ce que** l'axe de rotation (d) du système de soupape (3) est placé sous un angle quelconque et notamment à la perpendiculaire par rapport à l'axe de rotation (R) du rotor (9).

14. Moteur à combustion interne selon l'une quelconque des revendications précédentes, **caractérisé en ce que** la vitesse de rotation du système de soupape (3), notamment d'un système partiel de soupape (81, 82) est réglable par voie électrique ou mécanique, en fonction du régime du rotor (9).

15. Moteur à combustion interne selon l'une quelconque des revendications précédentes, **caractérisé en ce que** le système de soupape (3), notamment un système partiel de soupape (81, 82) est mécaniquement relié avec le rotor (9) ou avec un arbre d'entraînement, notamment via une transmission.

16. Moteur à combustion interne selon l'une quelconque des revendications précédentes, **caractérisé en ce que** sur sa paroi intérieure (15) qui fait face au rotor (9), le carter (5) comporte au moins un creux (23) destiné à recevoir les éléments d'extension (19) en forme de lamelles.

17. Moteur à combustion interne selon l'une quelconque des revendications précédentes, notamment l'une quelconque des revendications 1 ou 4 à 16, **caractérisé en ce que** la section de passage des gaz (49) comporte plusieurs orifices (57) en forme de buses, destinés à établir une liaison fluidique entre la chambre d'allumage (29) et la chambre de compression (27).

18. Moteur à combustion interne selon l'une quelconque des revendications précédentes, **caractérisé en ce que** le système de soupape (3), notamment un système partiel de soupape (81, 82), est conçu en une ou en plusieurs parties et comporte notamment au moins deux parties qui sont logées en étant rotatives dans des directions opposées, et qui lors d'une rotation synchrone forment la section de passage du rotor (49), la section de fermeture (51) et la section de passage des gaz (53).

19. Moteur à combustion interne selon l'une quelconque des revendications précédentes, **caractérisé en ce que** vu dans la direction de rotation (21) du rotor (9), le système de soupape (3), notamment un premier système partiel de soupape (81) est placé à l'avant du puits d'allumage (33).

20. Moteur à combustion interne selon l'une quelconque des revendications précédentes, **caractérisé en ce qu'**au moins un conduit d'alimentation (31) est placé dans le carter (5), qui vu dans la direction de rotation (21) du rotor (9), est placé à l'avant du système de soupape (3) et qui sert à alimenter du gaz ou un mélange combustible, notamment un mélange air/carburant ou de l'air dans la chambre de combustion (17).

21. Moteur à combustion interne selon l'une quelconque des revendications précédentes, **caractérisé en ce qu'**il est prévu au moins un système de soupape des gaz d'échappement (3') qui comporte au moins une section de passage rotative du rotor et au moins une section de fermeture rotative.

22. Moteur à combustion interne selon l'une quelconque des revendications précédentes, **caractérisé en ce que**, vu dans la direction de rotation (21) du rotor (9), le système de soupape des gaz d'échappement (3') est placé après le puits d'allumage (33).

23. Moteur à combustion interne selon l'une quelconque des revendications précédentes, **caractérisé en ce que** le système de soupape des gaz d'échappement (3') coopère avec au moins un conduit d'évacuation d'air (45) placé dans le carter (5), pour l'évacuation de gaz brûlé.

24. Moteur à combustion interne selon la revendication 19, **caractérisé en ce que** le conduit d'évacuation d'air (45) est en liaison fluidique avec le conduit d'alimentation (31), de sorte qu'au moins une partie du gaz brûlé puisse être alimentée dans la chambre de combustion (17)

25. Moteur à combustion interne selon l'une quelconque des revendications précédentes, **caractérisé en ce que** la chambre d'allumage (33) est délimitée par le rotor (9), par une saillie (13) radiale du rotor (9), par le système de soupape (3), notamment par un premier système partiel de soupape (81), par le puits d'allumage (33) et par la paroi intérieure (15) du carter (5).

26. Moteur à combustion interne selon l'une quelconque des revendications précédentes, **caractérisé en ce que** le rotor (9) est accouplé directement ou indirectement, notamment par l'intermédiaire d'une transmission avec une turbine (43) qui est chargée en gaz, notamment en gaz d'échappement à partir du conduit d'évacuation d'air (45).

27. Moteur à combustion interne selon l'une quelconque des revendications précédentes, **caractérisé en ce que** le système de soupape (3) est conçu sous la forme d'un double système de soupape, avec un premier système partiel de soupape (81) et un deuxième système partiel de soupape (82) qui sont notamment reliés l'un à l'autre de manière rigide ou qui sont conçus sous la forme de systèmes partiels de soupape (81, 82) séparés.

28. Moteur à combustion interne selon l'une quelconque des revendications précédentes, **caractérisé en ce que** le premier système partiel de soupape (81) et/ou le deuxième système partiel de soupape (82) sont/est conçu(s) sous la forme de soupapes de circuit, notamment avec un axe de rotation (d) commun ou des axes de rotation (d) séparés, de préférence avec des arbres séparés.

29. Moteur à combustion interne selon l'une quelconque des revendications précédentes, **caractérisé en ce que** le premier système partiel de soupape (81) et le deuxième système partiel de soupape (82) sont placés en étant décalés l'un par rapport à l'autre d'un double angle de soupape (W) compris entre 20 et 35 degrés dans la direction de rotation (21) du rotor (9).

30. Moteur à combustion interne selon l'une quelconque des revendications précédentes, **caractérisé en ce que** le deuxième système partiel de soupape (82) comporte un disque de soupape (26) en forme de coupelle, une normale à la surface (N) du disque de soupape (26) s'écoulant de préférence à la parallèle de la direction de rotation (21) du rotor (9).

31. Moteur à combustion interne selon l'une quelconque des revendications précédentes, **caractérisé en ce que** le puits d'allumage (33) est placé entre un premier système partiel de soupape (81) et un deuxième système partiel de soupape (82).

32. Moteur à combustion interne selon l'une quelconque des revendications précédentes, **caractérisé en ce que** le rapport de vitesse du rotor (9) au système de soupape (3), notamment du premier système partiel de soupape (81) et/ou du deuxième système partiel de soupape (82), est de 1 : 3 ou de 2 : 3.

33. Moteur à combustion interne selon l'une quelconque des revendications précédentes, **caractérisé en ce qu'**au moins par segments, le long d'une surface extérieure (28) d'un disque de soupape (25, 26) du système de soupape (3), il est prévu au moins un élément d'étanchéité (20) qui est guidé de préférence dans des cannelures périphériques (66) et qui est respectivement adapté de préférence à la longueur d'une section de fermeture (51).

34. Moteur à combustion interne selon la revendication 33, **caractérisé en ce que** les éléments d'étanchéité (20) sont fixés sur le disque de soupape (25, 26) en étant déplaçables dans la direction radiale, de préférence avec un jeu radial compris 0,05 mm et 0,15 mm.

35. Moteur à combustion interne selon la revendication 33 ou 34, **caractérisé en ce que** les éléments d'étanchéité (20) comportent des trous oblongs (22) qui s'étendent dans la direction radiale et qui par l'intermédiaire de goujons (24) guidés dans ces derniers, sont fixés de manière déplaçable dans la direction radiale sur un disque de soupape (25, 26).

36. Moteur à combustion interne selon l'une quelconque des revendications 1 à 32, **caractérisé en ce qu'**au moins par segments, des joints à labyrinthe, de préférence des joints d'étanchéité à l'air à labyrinthe sont prévus dans une surface extérieure (28) d'un disque de soupape (25, 26) du système de soupape (3) et/ou dans une surface extérieure et/ou dans une surface latérale des saillies (13) radiales.

37. Moteur à combustion interne selon l'une quelconque des revendications précédentes, **caractérisé en ce que** de l'air comprimé est guidé à des fins de refroidissement à travers le système de soupape (3), de l'air de refroidissement circulant de préférence à travers une section du système de soupape (3), en direction radiale vers l'extérieur.

38. Moteur à combustion interne selon l'une quelconque des revendications précédentes, **caractérisé en ce que** l'axe de rotation (d) d'un système de soupape des gaz d'échappement (3') s'écoule à la parallèle de l'axe de rotation (R) du rotor (9).

39. Moteur à combustion interne selon l'une quelconque des revendications précédentes, **caractérisé en ce qu'**un compresseur, muni de préférence d'aubes radiales de compresseur est accouplé avec le rotor, pour mettre à disposition de l'air frais pré-comprimé et/ou doté d'une certaine pression d'air de charge en tant qu'air de refroidissement dans un conduit d'alimentation (31) .

40. Procédé, destiné à faire fonctionner un moteur à combustion interne selon l'une quelconque des revendications 1 ou 4 à 39, comportant les étapes suivantes, consistant à :
- alimenter du gaz ou un mélange combustible, notamment un mélange air/carburant ou de l'air dans la chambre de combustion (17) ;
- faire passer le rotor (9) à travers la section de passage du rotor (49), pour créer la chambre d'allumage (33) et pour alimenter du gaz dans la chambre d'allumage ;
- faire tourner le système de soupape (3) et fermer la chambre d'allumage (33) avec la section de fermeture (51) ;
- activer le système d'alimentation en carburant et d'allumage (35, 37) et procéder à l'allumage dans la chambre d'allumage (33) ;
- faire tourner le système de soupape (3) et alimenter un gaz comprimé ou un mélange combustible de la chambre de compression (27) à travers la section de passage de gaz (53) dans la chambre d'allumage (29).

41. Procédé, destiné à faire fonctionner un moteur à combustion interne selon l'une quelconque des revendications 2 à 39, comportant les étapes suivantes, consistant à :
- alimenter (1001), notamment aspirer du gaz ou un mélange combustible, notamment un mélange air/carburant ou de l'air dans une première chambre de combustion (171) ;
- séparer (1002) une chambre de compression (27) de la première chambre de combustion (171) par fermeture du système de soupape (3), notamment d'un deuxième système partiel de soupape (82) du système de soupape (3),
- comprimer (1003) le gaz ou le mélange combustible dans la chambre de compression (27) par rotation du rotor (9),
- faire tourner plus loin (1004) le rotor (9) à l'avant d'un premier système partiel de soupape (81) du système de soupape (3) ou à travers celui-ci, notamment après l'ouverture préalable du premier système partiel de soupape (81),
- séparer (1005) une chambre d'allumage (29) d'une deuxième chambre de combustion (172) par fermeture du premier système partiel de soupape (81),
- alimenter (1006) du gaz ou un mélange combustible hors de la chambre de compression (27) dans la chambre d'allumage (29), par l'intermédiaire d'une liaison fluidique entre la chambre de compression (27) et la chambre d'allumage (29), notamment en chassant le gaz ou le mélange combustible en continuant à faire tourner le rotor (9) ;
- activer (1007) le système d'alimentation en carburant et d'allumage (35, 37) et procéder (1008) à l'allumage dans la chambre d'allumage (33).

42. Procédé selon la revendication 40 ou 41, **caractérisé par** au moins une réalisation réitérée d'un allumage après l'alimentation du gaz ou du mélange combustible comprimé dans la chambre d'allumage (29).

43. Procédé selon l'une quelconque des revendications 40 à 42, **caractérisé en ce qu'**au moins une partie du gaz ou du mélange combustible comprimé dans la chambre de compression (27) est temporairement accumulée dans un système accumulateur.

44. Procédé selon l'une quelconque des revendications 40 à 43, **caractérisé en ce que** du gaz ou un mélange combustible temporairement accumulé est alimenté dans la chambre d'allumage (33) et/ou utilisé pour faire démarrer le moteur à combustion interne.

45. Procédé selon la revendication 41, **caractérisé par** les étapes suivantes, après la réalisation du premier allumage dans la chambre d'allumage (33), consistant à ;
- ouvrir (1009) le deuxième système partiel de soupape (82) ;
- injecter (1010) de l'air comprimé à partir de la chambre de compression (27) à travers des orifices (57) en forme de buses dans le premier système partiel de soupape (81) dans la deuxième chambre de combustion (172),
- fermer (1011) le deuxième système partiel de soupape (82).
